(19) Europäisches Patentamt
European Patent Office
Office européen des brevets

(11) **EP 1 898 419 A1**

(12) **EUROPEAN PATENT APPLICATION**

(43) Date of publication:
**12.03.2008 Bulletin 2008/11**

(51) Int Cl.:
**G11B 27/32** *(2006.01)*

(21) Application number: **07114600.5**

(22) Date of filing: **20.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **05.09.2006 JP 2006240379**

(71) Applicant: **Kabushiki Kaisha Toshiba
Minato-ku, Tokyo 105-8001 (JP)**

(72) Inventors:
• **Kikuchi, Shinichi
  Tokyo 105-8001 (JP)**
• **Nakashika, Masahiro
  Tokyo 105-8001 (JP)**

(74) Representative: **Henkel, Feiler & Hänzel
Patentanwälte
Maximiliansplatz 21
80333 München (DE)**

(54) **Digital stream recording medium, recording method, and reproducing method**

(57) In order to add, to a standard, a mode that can generate management information in a manufacturer unique format, a data area of an information medium that records a digital stream signal using a format of the predetermined standard separately records data as a plurality of objects, and its management area records predetermined management information (ESTR_FI_FN; HR_SFInn. IFO). The management information is configured to include information indicating recording in a management format unique to a manufacturer (Manufacturer_MODE indicated by "nn" of HR_SFInn.IFO = F0 to FF) and information (Manufacturer_ID) used to specify that manufacturer.

FIG.6

ESTR_FI_SRP_Ns : Number of ESTR_SRPs : 0≦ESTR_FI_SRP_Ns≦4
AP_FORMAT1 : Describe broadcasting scheme (Major) :
   00010001h=JapanISDB, 00020001h=ATSC, 003001h=Europe DVB, ffffffffh or 00000000h=Manufacturer_MODE
ESTR_FI_FN : ESTR_FI file name : HR_SFInn.IFO
   This "nn" part is reflected in File Name : HR_STMnn.IFO of STMAP to determine file name of STMAP
   nn=F0~FF : Manufacturer_MODE
Manufacturer_ID : Manufacturer ID (example : toshibo...)
MNF_AP_ID : Set source of recorded stream (example : digital camera, digital VTR...)

**Description**

The invention relates to an improvement of the standard used upon recording and reproducing a digital stream signal such as an AV content or the like.

In recent years, TV broadcasting has entered the era of digital broadcasting having high-definition television programs (programs of high-resolution AV information) as principal broadcasting contents. The currently available satellite digital TV broadcasting and terrestrial digital TV broadcasting adopt an MPEG2 transport stream (to be abbreviated as an MPEG-TS or TS stream hereinafter as needed). In the field of digital broadcasting using moving pictures, the MPEG-TS will be used as a standard format in the future. At the start of such digital TV broadcasting, market needs for a streamer that can directly record digital TV broadcasting contents (on a hard disc and/or optical disc) are increasing.

As an example of a streamer that utilizes an optical disc such as a DVD-RAM or the like, "A recording and reproduction apparatus" (JP-A 2002-84479(KOKAI)) is known.

As a typical example of the next-generation standard that allows to record and reproduce the high-definition television digital broadcasting and the like, the HD_DVO-VR standard is available. However, as contents of streams, Digital Handycam® and the like are known in addition to digital broadcasting. Also, infrastructures using digital streams such as various kinds of cable broadcasting, Internet broadcasting, and the like are beginning to prevail. The standard of each individual stream can be interpreted upon recording. However, Digital Handycam or the like is not registered in the HD_DVD-VR standard. Nevertheless, system time clock (STC)-based time map (TMAP) data can be generated. However, some pieces of management information (ESTR_FI, ESOBI, etc.) of the HD_DVD-VR standard are unlikely to be generated.

One object of the invention is to add a mode that can generate management information in a format unique to each manufacturer to the predetermined digital video recording standard.

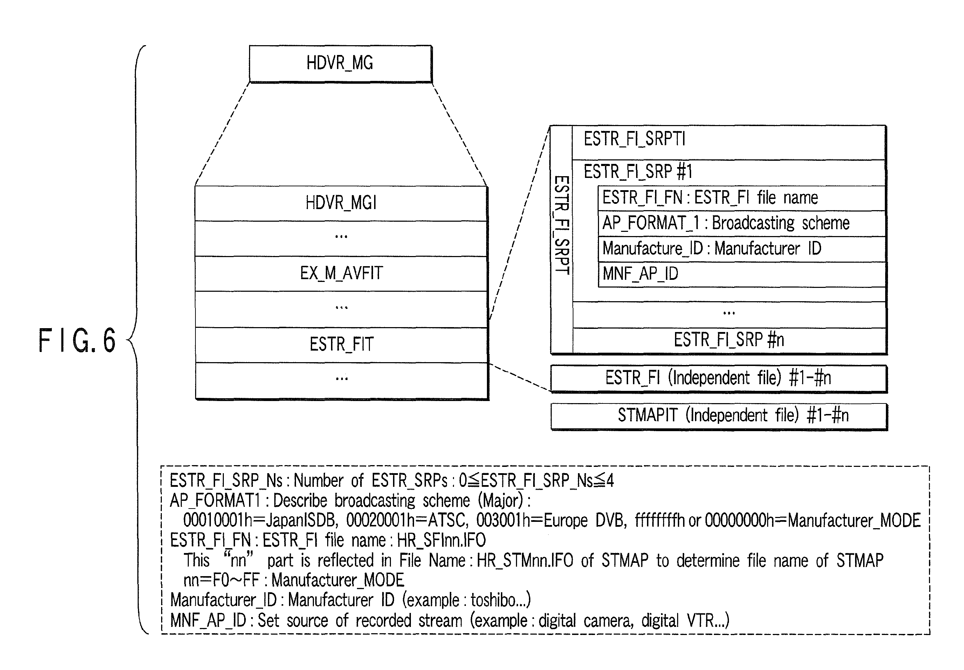

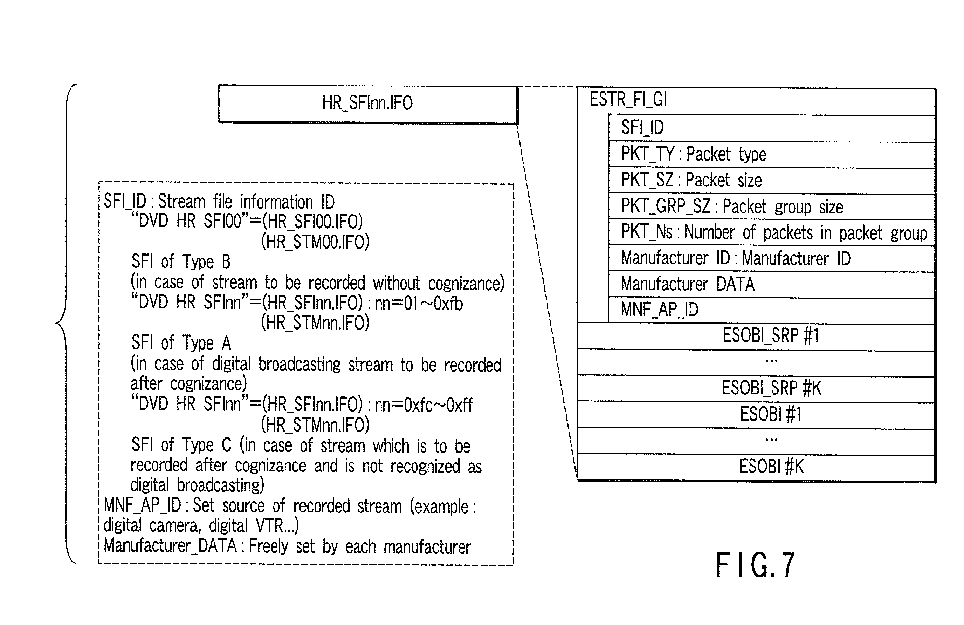

The invention uses an information medium which is configured to record a digital stream signal using a predetermined format (such as HD_DVD-VR format, etc.). This information medium has a management area and a data area. The data area is configured to record data of the digital stream signal separately as a plurality of objects (ESOB, etc.). The management area is configured to record predetermined management information (HDVR_MG in FIG. 6/ESTR_FI_FN; HR_SFInn.IFO in FIG. 7, etc.).

The management information is configured to have information (Manufacturer_MODE: ESTR_FI_FN: HR_SFInn.IFO: indicating a Manufacturer_MODE when "nn" = F0 to FF or 0xf0 to 0xff) indicating that recording is made in a management format unique to a manufacturer (maker) and information (Manufacturer_ID) used to specify that manufacturer. (As the manufacturer, a hardware manufacturer is assumed, and the manufacturer also includes a software house, contents provider, and the like.) With this mode, flexible control compatible to contents other than digital broadcasting can be implemented.

The invention can be more fully understood from the following detailed description when taken in conjunction with the accompanying drawings, in which:

FIG. 1 is an exemplary view explaining an example of the data structure to be applied to an information medium (optical disc, hard disc, or the like) according to one embodiment of the invention;

FIG. 2 is an exemplary view explaining the relationship among a reproduction management information layer, object management information layer, and object layer in the data structure according to the embodiment of the invention;

FIG. 3 is an exemplary view explaining the file structure according to the embodiment of the invention;

FIG. 4 is an exemplary view explaining an example of the types of contents to be handled by the embodiment of the invention;

FIG. 5 is an exemplary view explaining another example of the types of contents to be handled by the embodiment of the invention;

FIG. 6 is an exemplary view explaining an example of the configuration of management information (HDVR_MG/ESTR_FIT);

FIG. 7 is an exemplary view explaining an example of the configuration of a management information file (HR_SFInn.IFO);

FIG. 8 is an exemplary view explaining an example of the configuration of management information (ESOBI_GI) ;

FIG. 9 is an exemplary view explaining an example of the configuration of management information (ESOB_ESI);

FIG. 10 is an exemplary view explaining an example of the configuration of management information (PGCI);

FIG. 11 is an exemplary block diagram explaining an example of an apparatus for recording and reproducing AV information (digital TV broadcasting program and the like) on and from an information medium (optical disc, hard disc, or the like) using the data structure according to the embodiment of the invention;

FIG. 12 is an exemplary flowchart explaining an example of the overall operation of the apparatus;

FIG. 13 is an exemplary flowchart explaining an example of edit processing;

FIG. 14 is an exemplary flowchart explaining an example of a video recording operation (former half);

FIG. 15 is an exemplary flowchart explaining an example of a video recording operation (latter half);

FIG. 16 is an exemplary flowchart explaining an example of management information (ESI) generation processing;

FIG. 17 is an exemplary flowchart explaining an example of management information (ESTR_FI) generation processing;

FIG. 18 is an exemplary flowchart explaining an example of program setting processing;

FIG. 19 is an exemplary flowchart explaining an example of a reproducing operation;

FIG. 20 is an exemplary flowchart explaining an example of a decoder setting operation; and

FIG. 21 is an exemplary flowchart explaining an example of title reproduction determination processing.

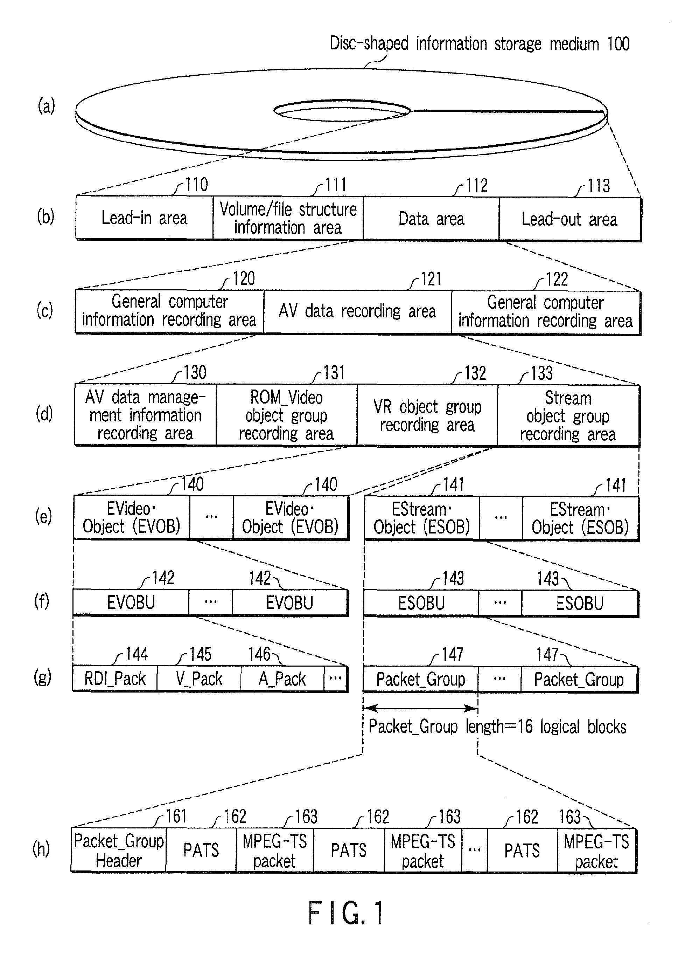

Various embodiments will be described hereinafter with reference to the accompanying drawings. FIG. 1 is an exemplary view for explaining the data structure according to one embodiment. As a typical example of a Recordable or Re-writable information medium, DVD disc (DVD±R, DVD±RW, DVD-RAM, or the like, which has a single recording layer or multi-recording layers using a red laser of a wavelength around 650 nm or a blue-violet or blue laser of a wavelength of 405 nm or less) 100 is used. As shown in FIG. 1, this disc 100 is configured to include volume/file structure information area 111 that stores a file system, and data area 112 that actually records data files. The file system includes information indicating the recording locations of files.

Data area 112 includes areas 120 and 122 which record general computer data, and area 121 that records AV data. AV data recording area 121 is configured to include AV data management information area 130 that stores a video manager (VMG) file used to manage AV data, ROM_Video object group recording area 131 that records a file of object data complying with the DVD-Video (ROM Video) standard, VR object group recording area 132 that records a file (VRO file) of object data (EVOBS: Extended Video Object Set) complying with the video recording (VR) standard, and recording area 133 that records a stream object data (ESOBS: Extended Video Object Set) file (SRO file) which records objects compatible to digital broadcasting. Note that the recording standard for the SRO file will be described as stream recording (SR) standard as needed.

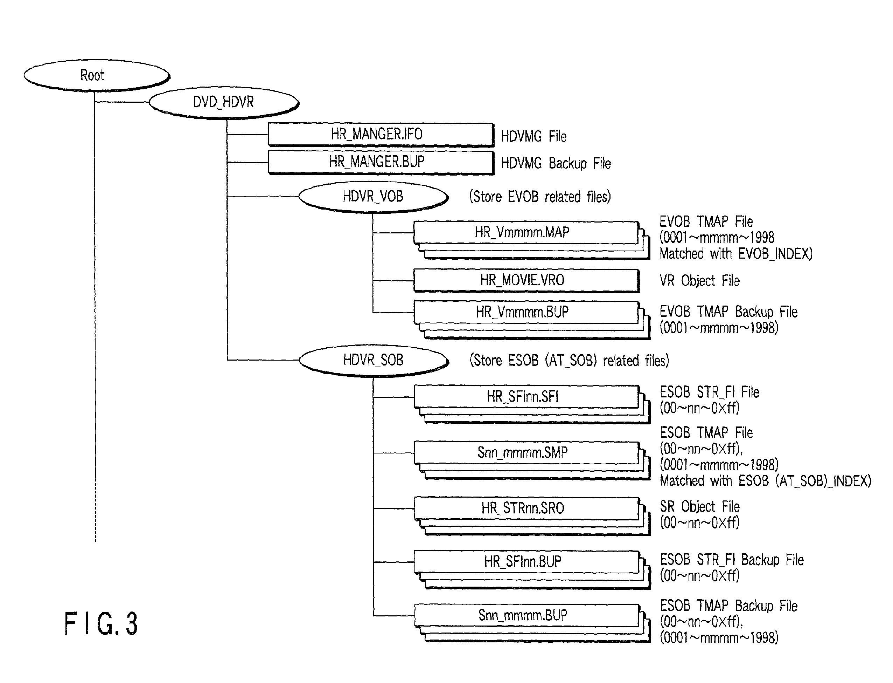

Note that different file directories are prepared in correspondence with formats (e.g., a video title set (VIDEO-TS) for DVD-Video (ROM Video) and DVD-RTAV for recordable/reproducible DVD (DVD-RTR)), and a new DVD standard file compatible to digital broadcasting to be described in this embodiment is recorded in, e.g., a DVD_HDVR directory (to be described later with reference to FIG. 3). That is, the DVD_HDVR directory records a VMG file used to manage data, VRO files as object files for analog recording of analog broadcasting data, line-in data, and the like, and an SRO file as a digital broadcasting object. The SRO file records an ESOBS.

In the configuration of FIG. 1, one ESOBU 143 is configured by one or more packet groups 147. Each packet group 147 corresponds to 16 (or 32) packs (1 pack = 1 logical block: 2048 bytes), and includes packet group header 161 and a plurality of TS packets 163 (170 packets). The arrival time of each TS packet can be expressed by PATS (Packet Arrival Time Stamp: 4 bytes) 162 allocated before that TS packet.

In packet group header 161 allocated at the head of each packet group 147, Header_ID (0x00000FA5) is set. After the Header_ID, the header includes packet group general information (PKT_GRP_GI), copy management information CCI (Copy Control Information) or CPI (Contents Protection Information), and manufacturer information MNI or MNFI (Manufacturer's Information).

The arrival times of TS packets needs to be linearly counted up until a video recording end time to have a video recording start time as 0 (or a predetermined value). Note that an STC (System Time Counter) and the PATS may not always indicate the same value (due to their different default values or the like). However, it is favorable to control the count interval of a PATS counter to be synchronized with that of an STC counter which corresponds to the interval between neighboring PCR fetch timings in a reproduction synchronized state. Note that the PCR is included in an adaptation field (not shown) in an MPEG-TS. A packet group can include a maximum of two ESOBs. That is, packet groups need not be aligned for respective ESOBs.

Note that the lower 4 bytes unique to each PATS are included in that PATS (an information field of the packet arrival time), but the upper 2 bytes of the first PATS are included in FIRST_PATS_EXT described in the packet group general information (PKT_GRP_GI) in packet group header 161. With this configuration, the data size can be reduced compared to a case wherein 6-byte packet arrival times are independently described in respective PATS data.

The PKT_GRP_GI includes packet group type PKT_GRP_TY (1 = MPEG-TS), packet group version number VERSION, packet group status information PKT_GRP_SS, the number Valid_PKT_Ns of valid packets in the packet group, upper 2 bytes FIRST_PATS_EXT of the PATS for the first packet, and the like (although not shown).

Furthermore, the PKT_GRP_SS includes bit STUF indicating if stuffing is done (if this STUF bit is set, it indicates that the Valid_PKT_Ns assumes a value other than 0xAA), and PATS_SS. Note that the PATS_SS includes a value indicating the accuracy of the PATS (when PATS SS = 00, both PATS and FIRST_PATS_EXT are valid and accuracy = 6 bytes is set; when PATS_SS = 01, only PATS is valid and accuracy = 4 bytes is set; and when PATS_SS = 10, both PATS and FIRST_PATS_EXT are invalid and no accuracy is set).

Note that extended bytes FIRST_PATS_EXT of the PATS of the first packet include the upper 2 bytes of the arrival time of the packet at the head of the packet group, and the remaining 4 bytes are assigned before each packet. In this manner, the reproducing process with an accurate time is allowed.

Packet group header 161 includes a description location of CP CTL INFO (not shown: copy control information: to be abbreviated as CCI or CPI as needed). The CP_CTL_INFO is stored in CCI (or CPI) in packet group header 161, and makes the copy control of each packet group at the position of packet group header 161. The values of this CCI (or CPI) are set by a digital copy control descriptor and content use descriptor. The contents of the CCI (or CPI) are: for example, CGMS (0 = copy never; 1 = copy free); APS (0 = no APS, 1 = append APS type 1, 2 = append APS type 2, 3 = append APS type 3); EPN (0 = contents protection (Internet output protection), 1 = no contents protection); and ICT (0 = resolution constraint, 1 = no constraint).

Alternatively, CCI (or CPI) may include digital copy control (00 = copy never, 01 = copy once, 11 = copy free, analog copy control (00 = no APS, 01 = APS type 1, 10 = APS type 2, 11 = APS type 3), EPN (0 = contents protection, 1 = no contents protection), and ICT (0 = analog video output resolution constraint, 1 = no constraint). Note that APS is an abbreviation for "Analog Protection System", and the embodiment assumes Macrovision®.

Also, the copy control information (CCI or CPI) is set on the management information side (ESOBI_GI) to perform copy management (copyright management) for the whole system, or the CCI (or CPI) is set on both the management information side and the object side (packet group) to perform copy management (copyright management) in two levels in preference to the object side (packet group). More specifically, a title menu uses the CCI of ESOBI_GI, and an actual device operation can execute processing in preference to packet groups.

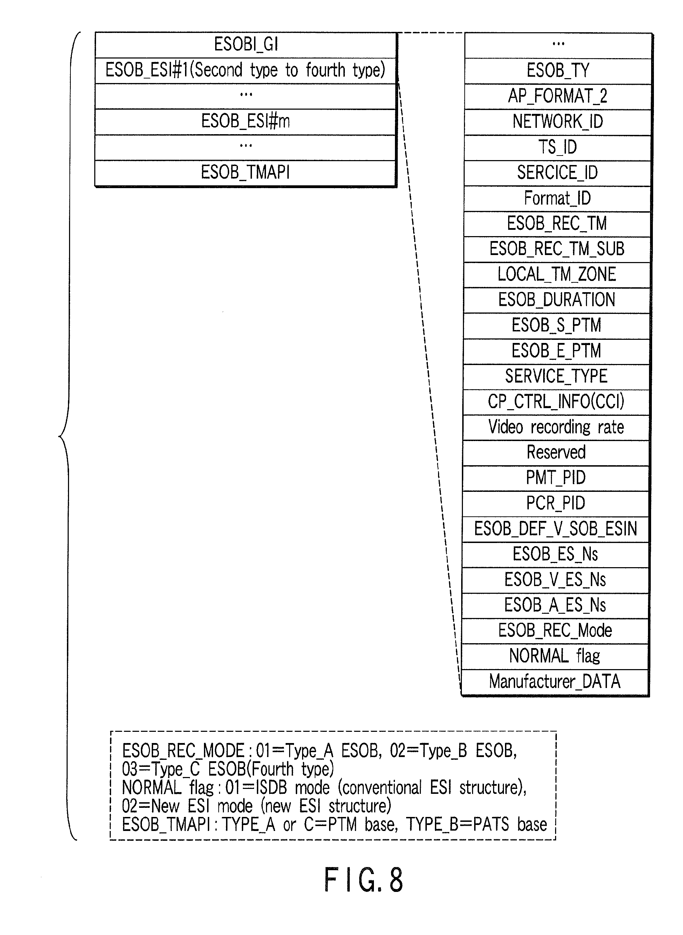

The structure of stream object set ESOBS recorded in stream object group recording area 133 in FIG. 1(d) includes one or more ESOBs 141. Each ESOB corresponds to, e.g., one program of TV broadcasting. ESOB 141 includes one or more ESOBUs (Extended Stream object units) 143. Each ESOBU corresponds to object data for a given time interval (which changes depending on the value of an ESOBU_PB_TM_RNG (not shown)) or one or more GOP data. (Note that the ESOBU_PB_TM_RNG is included in time map information ESOB_TMAPI in ESOBI shown in FIG. 8 to be described later.)

When the transfer rate is low, one GOP data cannot often be sent within 1s (1 sec) (VR can freely set GOP data since it adopts internal encoding, but digital broadcasting cannot specify the next incoming data since encoding is done by a broadcasting station). In this case, ESOBUs are delimited by a time period of 1s and 1STREF_SZ = 0 is set in the delimited ESOBU to indicate the absence of a reference picture. In this case, ESOBUs which cannot be used in random access are generated. For this reason, an ESOBU which includes the head of a picture that allows random access is distinguished from the above ESOBUs by calling it an entry ESOBU (ESOBU_ENT). Note that an information field of 1STREF_SZ is assured in an ESOBU_ENT (not shown) in a stream time map (ESTMAP) included in a stream file information table (ESTR_FIT).

On the other hand, the transfer rate may be high, and I-picture data may be sent frequently. In such case, ESOBUs are delimited frequently, and ESOBU management information increases accordingly, thus ballooning the whole management information. For this reason, it is appropriate to delimit ESOBUs by a given time interval (for, e.g., Is: a delimitation unit = picture unit) or by one or more GOP data.

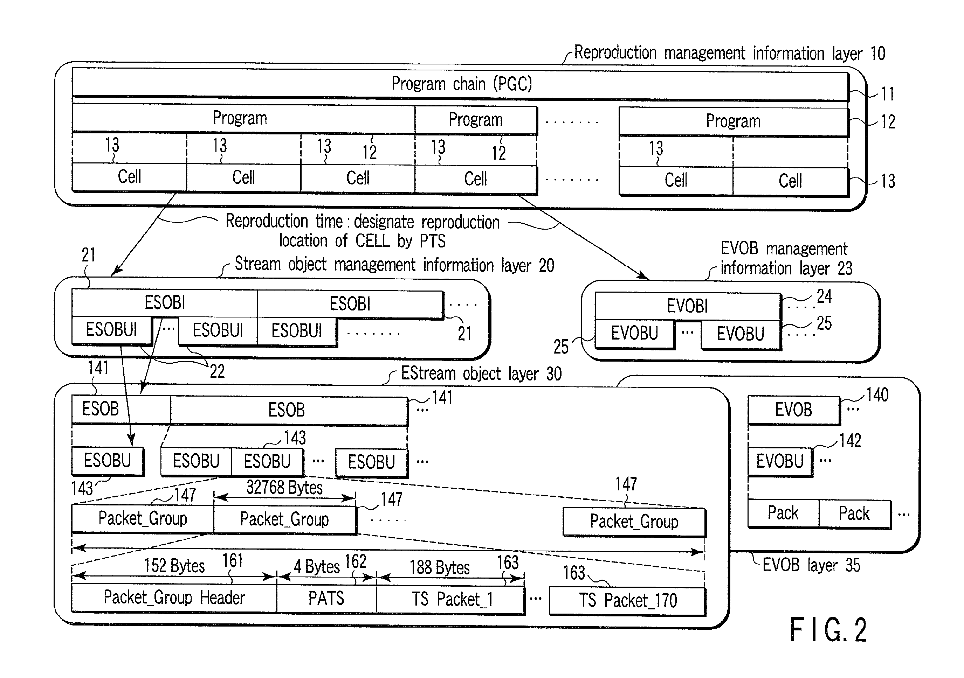

FIG. 2 is an exemplary view explaining the relationship among a reproduction management information layer, object management information layer, and object layer in the data structure according to the embodiment. As shown in FIG. 2, SR management data is recorded in a file common to VR, and undergoes control common to VR. SR and VR data are linked for respective cells, and the reproduction location is designated for each reproduction time. This management data is called HR_MANGER.IFO (to be described later with reference to FIG. 3).

One ESOBU is configured by one or more packet groups. Each packet group includes 16 logical blocks (32768 bytes when 1 LB = 2048 bytes). Also, the packet group includes a packet group header and TS packets (170 packets). The arrival time of each TS packet can be expressed by a PATS (Packet Arrival Time Stamp: 4 bytes) allocated before that TS packet.

The management information will be described below with reference to FIGS. 3 to 10 and the like. FIG. 3 is an exemplary view explaining an example the file structure according to the embodiment. In this example, EVOB and ESOB directories are managed by hierarchical directories. In this way, management for respective objects is facilitated, and upon converting data into HD_DVD-VIDEO, an HDVR_VOB directory need only be accessed.

In FIG. 3, the DVD_HDVR directory stores HR_MANGER.IFO (VMG file), and an HDVR_VOB directory stores an EVOB object file: HR_MOVIE.VRO and TMAP files for each EVOB: HR_Vmmmm.MAP (mmmm assumes the same number as VOB_INDEX: 1 to 1998). An HDVR_SOB directory stores ESOB object files: HR_SFRnn.SRO, ESOB (AT_SOB) management files: HR_SFInn.SFI: (TYPE_B when nn = 00, TYPE_A when nn = 01 to 0xff), and TMAP files for each ESOB (AT_SOB): Snn_mmmm.SMP: (TYPE_B when nn = 00, TYPE_A when nn = 01 to 0xff, mmmm assumes the same number as ESOB (AT_SOB)_INDEX: 1 to 1998). In this case, a common VTMAP structure may be adopted to enhance compatibility to HD_DVD-VIDEO. Upon adding TYPE_C to be described later with reference to FIG. 5 and the like, for example, nn = 0xf0 to 0xff can be set.

An MPEG-TS scheme as a basic format common to broadcasting schemes which broadcast (distribute) compressed moving picture data such as digital TV broadcasting, broadcasting that uses a wired network such as the Internet or the like, and so on is divided into a packet management data field and payload. The payload includes data to be reproduced in a scrambled state. According to ARIB, a PAT (Program Association Table), a PMT (Program Map Table), and SI (Service Information) are not scrambled. Also, various kinds of management information are generated using the PMT and the SI (SDT: Service Description Table, EIT: Event Information Table, BAT: Bouquet Association Table).

The contents to be reproduced include MPEG video data, Dolby AC3 audio data, MPEG audio data, data broadcasting data, and the like. Also, the contents include information used upon reproduction (e.g., a PAT, a PMT, SI, and the like) although they are not directly related to the contents to be reproduced. The PAT includes the PID (Packet Identification) of the PMT for each program, and the PMT records the PIDs of video data and audio data.

For example, a normal reproduction sequence of an STB (Set Top Box) is as follows. That is, when the user determines a program based on an electronic program guide (EPG information) or the like, the PAT is loaded at the start time of the target program. The PID of a PMT, which belongs to the desired program, is determined based on the loaded data, and the target PMT is read out in accordance with that PID. Then, the PIDs of video and audio packets to be reproduced, which are included in the PMT, are determined. Video and audio attributes are read out based on the PMT and SI and are set in respective decoders. The video and audio data are extracted and reproduced in accordance with their PIDs. Note that the PAT, PMT, SI, and the like are transmitted at intervals of several 100 ms since they are also used to switch channels (to display a video picture immediately after the channel is switched). The HD_DVD-VR standard is configured to manage such stream recording and reproduction.

As broadcasting for mobiles, 1 segment broadcasting is currently made. The 1 segment broadcasting uses no PAT, and only an NIT (Network Information Table) and PMTs. A PMT is determined in advance by a service number described in the NIT, and a PMT is determined according to this service number.

Upon recording digital broadcasting by transmitting data from a tuner to a recorder such as a streamer or the like, only object data of a target program is selected and recorded. This format is called a partial TS. In this case, the PAT and/or PMT are/is re-edited in correspondence with the target program, and an SIT (Selection Information Table) and DIT (Discontinuity Information Table) are added. The SIT is generated based on information such as an EIT (Event Information Table) and the like in broadcasting, and is inserted at the same timing as the EIT. The DIT is inserted at a discontinuous position of a bitstream. The DIT is inserted as a pair of TS packets. With this table, whether or not the content of interest is discontinuous can be determined.

Currently, DVD recorders are prevalent, and are taking over the demand of VTR. Characteristic functions of the DVD recorder include a chapter (entry point) automatic generation function. Most of DVD recorders implement this function, which sets entry points at given time intervals (automatic chapter division) and allows to skip reproduction.

Also, digital broadcasting is prevalent, and analog broadcasting will be switched to digital broadcasting in the future. Hence, the embodiment propounds a method of setting entry points compatible to digital broadcasting upon automatically generating chapters in digital broadcasting as in analog broadcasting. Also, the embodiment propounds changing of a reproducing process (output method) by checking cell type C_TY (CELL_TYPE) for each cell as a reproduction unit of DVD.

Upon recording a digital broadcasting program on high-speed disc media such as an HDD, HD_DVD-RAM, and the like, it is favorable to record broadcast stream data as digital data intact. That is the reason why the HD_DVD-VR standard was born. This standard merges ESR (extend stream recording) as a format for recording a stream intact with VR unlike in the conventional VR (video recording) format. As a result the HD_DVD-VR standard is compatible to digital broadcasting while exploiting VR resources.

Different digital broadcasting schemes are adopted in respective countries: for example, DVB (Digital Video Broadcasting) in Europe; ATSC (Advanced Television Systems Committee) in U.S.A.; and ARIB (Association of Radio Industries and Businesses) in Japan.

In DVB, the video format is MPEG2, the resolutions are 1152*1440i, 1080*1920(i, p), 1035*1920, 720*1280, (576, 480)*(720, 544, 480, 352), and (288, 240)*352, the frame frequencies are 30 Hz and 25 Hz, the audio format includes MPEG-1 audio and MPEG-2 Audio, and the sampling frequencies are 32 kHz, 44.1 kHz, and 48 kHz.

In ATSC, the video format is MPEG2, the resolutions are 1080*1920(i, p), 720*1280p, 480*704(i, p), and 480*640(i, p), the frame frequencies are 23.976 Hz, 24 Hz, 29.97 Hz, 30 Hz, 59.94 Hz, and 60 Hz, the audio format includes MPEG1 Audio Layer 1 & 2 (DirecTV) and AC3 Layer 1 & 2 (Primstar), and the sampling frequencies are 48 kHz, 44.1 kHz, and 32 kHz.

In ARIB, the video format is MPEG2, the resolutions are 1080i, 720p, 480i, and 480p, the frame rates are 29.97 Hz and 59.94 Hz, the audio format includes AAC (MPEG-2 Advanced Audio Coding), and the sampling frequencies are 48 kHz, 44.1 kHz, 32 kHz, 24 kHz, 22.05 kHz, and 16 kHz.

In this manner, digital broadcasting schemes are different in different countries, and may also be different for respective broadcasting stations. For this reason, a recorder has to record objects as one or a plurality of files in accordance with each individual scheme to be used.

For this reason, files to be further added to the existing VR file configuration in the embodiment are configured to allow the presence of a plurality of "nn"s in the file names HR_SFInn.IFO and HR_SFInn.BUP, as shown in FIG. 3. One or more files with such configuration are added for respective broadcasting schemes.

For example, when "nn" = 00, such files can be used when the broadcasting scheme is unknown or the recorder does not support that broadcasting scheme. In this case, a stream whose broadcasting scheme is unknown or a stream which is not supported by the recorder can be saved as a stream (ESPB_STRB) of TYPE B. Hence, in order to change ESTR_FI as management information for digital broadcasting for each broadcasting station (or each broadcasting scheme), a plurality of pieces of ESTR_FI exist.

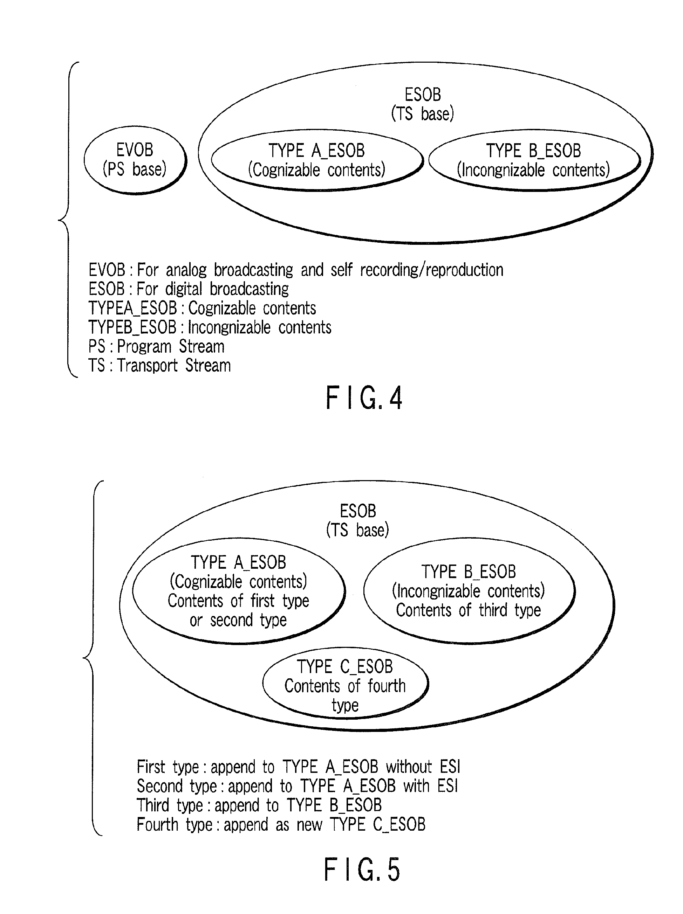

FIG. 4 is an exemplary view explaining an example of the types of contents to be handled in the embodiment. FIG. 5 is an exemplary view explaining another example of the types of contents to be handled in the embodiment. There are two types of contents for the existing HD_DVD-VR standard, as shown in FIG. 4: an EVOB for analog broadcasting or an analog input, and an ESOB for digital broadcasting. The ESOB is further divided into a cognizable content (TYPE_A_ESOB) and incognizable content (TYPE_B_ESOB). The EVOB is generated based on a PS (Program stream), and the ESOB is generated based on a TS (Transport stream).

In addition, as a method of adding a non-digital broadcasting content to a TS-based stream in the embodiment, four types are available, as shown in FIG. 5:

the first type is a method which adds a non-digital broadcasting content as TYPE_A, and omits ESI since the need for the ESI is eliminated when attribute information is determined in advance;
the second type is a method which adds such content as TYPE_A, and also ESI as attribute information as usual;
the third type is a method which adds such content as TYPE B; and
the fourth type is a method which processes such content as a new ESOB type which will be referred to as TYPE_C hereinafter.

As a basic unit of a stream of TYPE B (for example, a stream object including packets which arrive for 1 sec: ESPB_STRB), an AT_SOBU (Arrival Time based SOBU) is defined. Upon constructing PATS-based management information in case of an incognizable stream, the AT SOBU is delimited at time intervals indicated by an AT_SOBU_TM (Time Range of Arrival Time based SOBU). There are two types of AT_SOBU_TM data: it is designated in seconds (see FIG. 25) or by a 27-MHz count value. This AT_SOBU_TM can be described as a part of time map information of TYPE B in ESOBI (although not shown).

FIG. 6 is an exemplary view explaining an example of the configuration of the contents of stream file information (ESTR_FIT). The DVD_HDVR directory in FIG. 3 is configured to include HR_MANGER.IFO as a DVD management information file, a VRO file as an analog video object file, and an SRO file compatible to digital broadcasting. An HDVMG file (HDVR_MG in FIG. 6) as management information adopts a configuration in which an ESTR_FIT (Extend Stream File Information table) is added to the management information of the conventional DVD-VR standard.

The ESTR_FIT includes ESTR_FI search pointer table ESTR_FI_SPRT, one or more pieces of stream file information ESTR_FI#1 to ESTR_FI#n, and one or more stream time map tables STMAPT#1 to STMAPT#n. Each STMAPT includes one or more stream time maps STMAP#1 to STMAP#n (not shown). Each STMAP includes stream time map general information STMAP_GI, one or more elementary time map information search pointers ETMAPI_SRP#1 to ETMAPI_SRP#n, and one or more pieces of elementary time map information ETMAPI#1 to ETMAPI#n. Each ETMAPI includes one or more stream object unit entries ESOBU_ENT#1 to ESOBU_ENT#n. Each ESOBU_ENT includes 1STREF SZ that describes the size of the first reference picture (I-picture in case of MPEG-TS) of the ESOBU of interest, ESOBU_PB_TM that describes the reproduction time of the ESOBU of interest, ESOBU_SZ that describes the size of the ESOBU of interest, ESOBU_S_PKT_POS that describes the start packet position of the ESOBU of interest, and the like.

Furthermore, although not shown, M_VOBI describes update date and time information (VTMAP_LAST_MOD_TM) of each VTMAPT as a Video Recording (VR) TMAP (Time Map) for self recording and reproduction. Also, ESTR_FI_GI describes update date and time information (STMAP_FI_LAST_MOD_TM) of each STMAPT as a Stream Recording (SR) TMAP for digital broadcasting recording. These values are compared to update date and time information described in each TMAPT file, and if they are equal to each other, it is determined that consistency is assured, thus executing processing. Also, management information of stream data is saved in the VMG and is managed on the same basis as VR data.

Stream management information is saved in the ESTR_FIT (Stream File Information table). The ESTR_FIT includes an ESTR_FI_SRPT, a plurality of pieces of ESTR_FI, and an STMAPIT. The ESTR_FI_SRPT includes ESTR_FITI (ESTR_FIT information) and one or more ESTR_FI_SRPs. The ESTR_FITI includes the total number of pieces of ESTR_FI, and the end address of this table. Each ESTR_FI_SRP includes an ESTR_FI_FN (ESTR_FI_file_name), edit update time of an ESTR_FI file (ESTR_FI_LAST_MOD_TM), AP_FORMAT_1 (broadcasting scheme: major categories: Japan_ISDB, ATSC, EU_DVB, etc.), Country code (country code: e.g., JPN = Japan), PKT_TY (1 = MPEG-TS), ESOBI_Ns (the number of SOBs: the number of ESOBs or the number of AT_SOBs), ESTR_FI file size, total size of an STMAP, and the like.

In order to designate an ESTR_FI file to be used from a plurality of ESTR_FI files, the ESTR_FI_SRPT information shown in FIG. 6 is used, and its structure includes ESTR_FI_SRPTI and ESTR_FI_SRPs as pointer information for respective pieces of ESTR_FI. Note that each ESTR_FI_SRP includes AP_FORMAT_1 1 as broadcasting scheme information, Country code, Packet Type, the number of pieces of ESOBI, ESTR_FI size, and information of the STMAP size that belongs to the ESTR_FI of interest, in addition to file name ESTR_FI_FN of the ESTR_FI, update date and time information ESTR_FI_LAST_MOD_TM of the ESTR_FI file, file size ESTR_FI_SZ of the ESTR_FI, and the like. Note that the update date and time information is also set in the ESTR_FI file. When the ESTR_FI is changed upon editing, that value is also updated. Upon reproduction, this value is compared with the value in the ESTR_FI file, and when these values are equal to each other, the reproducing processing is permitted. For example, the number of pieces of ESTR_FI is four or less, and the number of pieces of SOBI is 999 or less. A part "nn" of ESTR_FI file name: HR_SFInn.IFO is reflected on that of File Name: HR_STMnn.IFO of the STMAP, thus determining the file name of the STMAP.

As TS stream contents, Digital Handycam, various kinds of cable broadcasting, Internet broadcasting, and the like are available in addition to digital broadcasting streams. The standard of each individual stream is cognizable upon recording, but is not registered in the existing HD_DVD-VR standard. With these standards, STC-based TMAP data can be generated, but some pieces of information such as STR_FI, SOBI, and the like may not be generated. Hence, the embodiment adds, to the HD_DVD-VR standard, a mode that can generate STR_FI, ESOBI, and the like in a format unique to each manufacturer (maker).

As characteristic features of streams other than digital broadcasting streams, PTS-based TMAP data can be generated since they are cognizable streams, but these streams may not include parameters such as component_tag, NETWORK_ID, SERVICE_TYPE, and the like, which are indispensably included in broadcasting in Japan. For this reason, conventional streams of TYPE_A and TYPE_B cannot be applied. The embodiment processes streams other than digital broadcasting streams as new streams by the method to be described below.

That is, a special code (e.g., ffffffffh or 0x00000000h) is set in the AP_FORMAT_1 in FIG. 6 so as to indicate that the stream is a stream added by this embodiment (Manufacturer_MODE). Furthermore, an ID (Manufacturer ID) indicating a manufacturer that manufactures a device to which the embodiment is applied, an ID (MNF_AP_ID) used to set the source of a recorded stream, and the like are added. Note that the Manufacturer ID may adopt a description that expresses a single manufacturer like TOSHIBO. Alternatively, a joint ID of a manufacturer group may be described as the Manufacturer_ID (e.g., TOSHIBO & MEC). Furthermore, information indicated by the Manufacturer_ID may include a description that represents a system software supply source of a computer or a contents provider of a stream to be recorded.

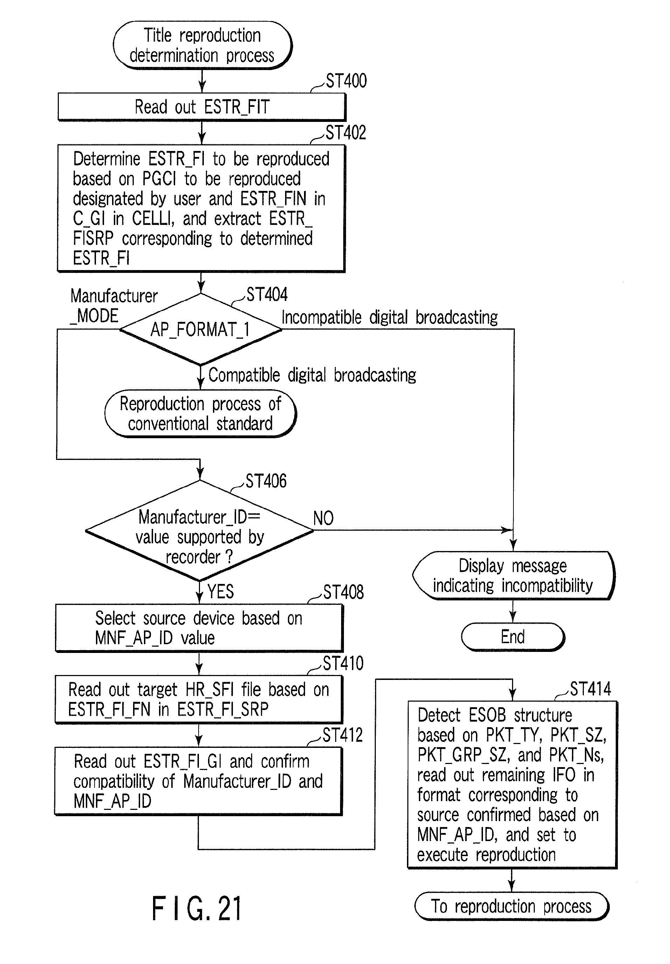

Each manufacturer (maker) can freely set the value of the MNF_AP_ID. For example, the MNF_AP_ID can use a character indicating the location of a source such as a digital camera recorder, digital VCR, and the like. With this MNF_AP_ID, the format of the subsequent ESTR_FI (independent file) can be discriminated without opening the ESTR_FI, and whether or not the recorder supports that format can be determined (reproduction determination processing using AP_FORMAT_ 1 will be described later with reference to FIG. 21).

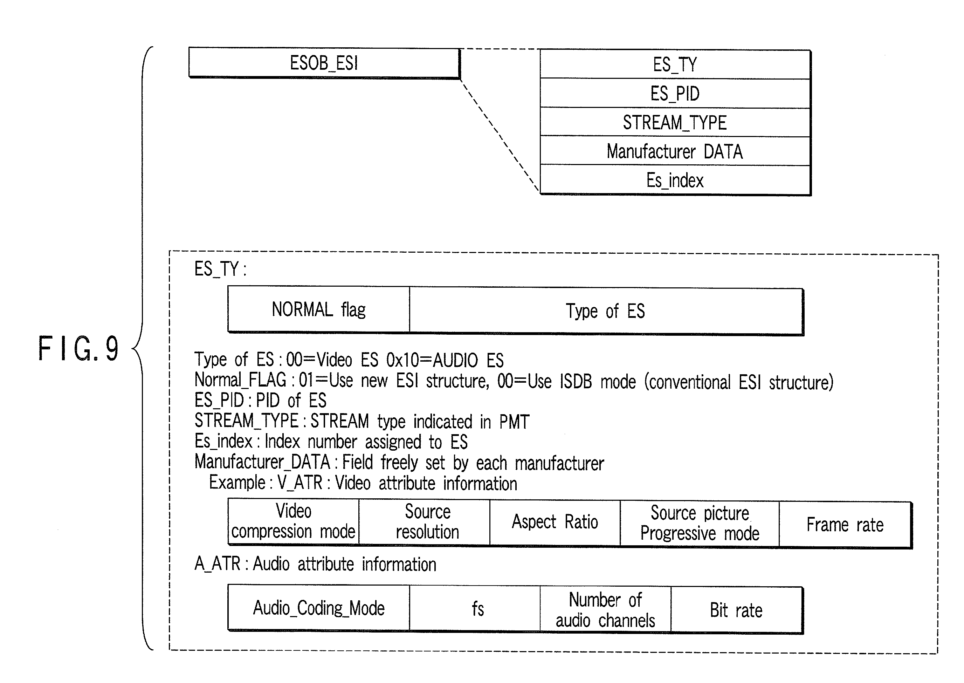

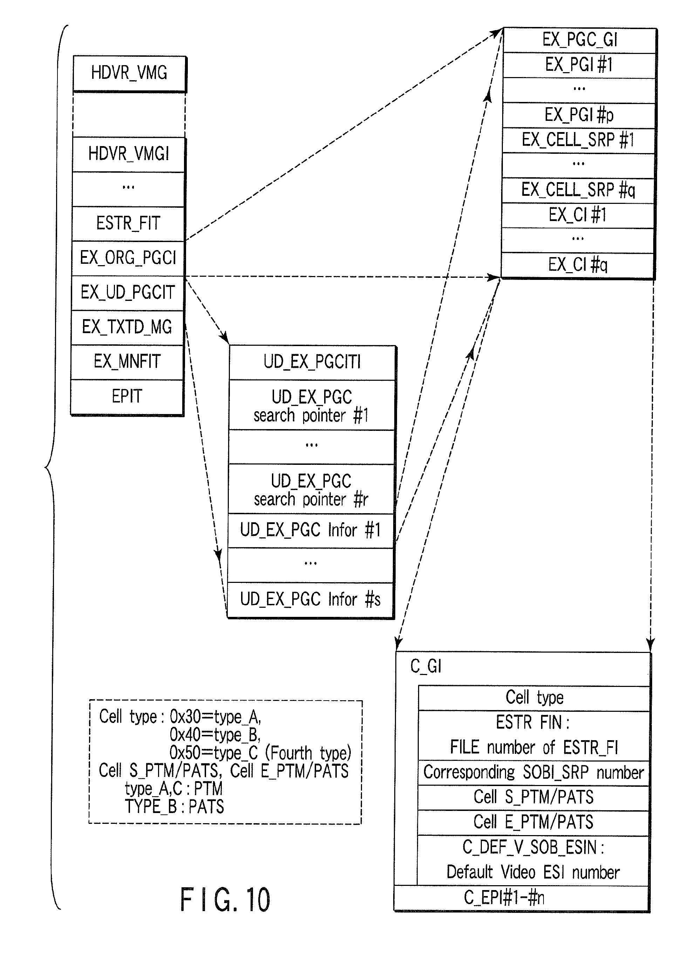

A description about the management information in the embodiment will continue. FIG. 7 is an exemplary view explaining an example of the configuration of a management information file (HR_SFInn.IFO). FIG. 8 is an exemplary view explaining an example of the configuration of a field (ESOBI_GI) of the management information. FIG. 9 is an exemplary view explaining an example of the configuration of another field (ESOB_ESI) of the management information. FIG. 10 is an exemplary view explaining an example of the configuration of management information (PGCI).

The ESTR_FI that has been explained with reference to FIG. 6 includes the ESTR_FI_GI (General Information), one or more ESOBI_SRPs (Stream Object information Search Pointers), and a plurality of pieces of ESOBI (ESOB information) which are prepared as many as the number of ESOBI_SRPs and are indicated by their values. The ESTR_FI_GI corresponding to one field of the HR_SFInn.IFO shown in FIG. 7 includes the file name/file number (SFI_ID) of an object managed by the ESTR_FI of interest, the number of ESOBI_SRPs in the ESTR_FI of interest, the VERSION number of the file of interest, a packet type PKT_TY (1 = MPEG-TS), packet size PKT_SZ, packet group size PKT_GP_SZ (fixed to 16 logical blocks), the number PKT_Ns of TS packets in a packet group (0xAA fixed to 170 TS packets), the STMAP update time, an STMAP size, and the like. This ESTR_FI_GI is further added with an ID (Manufacturer_ID) indicating a manufacturer that manufactures a device to which the embodiment is applied, an ID (MNF_AP_ID: each manufacturer can freely set this value: e.g., an ID indicating the location of a source such a digital cam, digital VTR, or the like) used to set the source of a registered stream, Manufacturer DATA (a field where each manufacturer can freely set), and the like.

Note that SFI_ID is expressed as "HR_SFInn", which is set to be "HR_SFI00" in a TYPE B recording mode. In a TYPE A recording mode, "nn" of "HR_SFInn" assumes one of values ranging from "01" to "FF". That is, whether or not "nn" of "HR SFInn" assumes "00" can be determined to identify whether the recorded ESOB is TYPE A or B.

The ESOBI includes ESOBI_GI, ESOB_ESI (Elementary Information), ESOB_DCNI (Discontinue Information), ESOB_CONNI, ESOB_TMAP (Time Map), and the like. As shown in FIG. 8, the ESOBI_GI records at least ESOB_

7

REC_MODE, AP_FORMAT_2 (Minor), video recording start time (ESOB_REC_TM), video recording time period (ESOB_DURATION: ALL 0xff if no valid value is available), start presentation time (ESOB_S_PTM/ESOB_S_PATS), end Presentation Time (ESOB_E_PTM/ESOB_E_PATS), and the like. Furthermore, the ESOBI_GI can record SERVICE_ID, PMT_PID, NETWORK_ID, TS_ID, FORMAT_ID, SERVICE_TYPE, PCR_PID, and the like based on PSI and SI values. Note that AP_FORMAT_2 indicates ISDB-S (BS/CS broadcasting) when it describes "1", ISDB-T (terrestrial digital broadcasting) when it describes "2", and others when it describes "0xff" (which is set for a stream of Digital Handycam® or the like to be added in this embodiment).

Moreover, the ESOBI_GI in FIG. 8 can record ESOB_ES_Ns (the number of ESs selected for video recording), ESOB_V_ES_Ns (the number of ESs for which TMAP data are generated of recorded video ESs), and ESOB_A_ES_Ns (the number of ESs for which TMAP data are generated of recorded audio ESs). Also, Manufacturer_DATA (a field where each manufacturer can freely set) and the like can be added to the ESOBI_GI.

However, a TYPE_B stream and a stream to be added currently may often be recorded without being cognized. In this case, the PSI and SI values are unknown (or unreliable), and the SERVICE_ID, PMT_PID, NETWORK_ID, TS_ID, FORMAT_ID, SERVICE_TYPE, PCR_PID, and the like cannot be described. In this case, a flag indicating invalidity of information of PSI/SI may be set in ESOB_TY. In this case, the values of the SERVICE_ID, PMT_PID, NETWORK_ID, TS_ID, FORMAT_ID, SERVICE_TYPE, PCR_PID, and the like are invalid. In place of the whole flag, invalid values (0xff) may be set for respective values of SERVICE_ID, PMT_PID, NETWORK_ID, TS_ID, FORMAT_ID, SERVICE_TYPE, and PCR_PID, and these values may be set in case of invalidity. However, even in TYPE_B, PSI and SI values may often be valid.

The ESOB_REC_MODE included in the ESOB_GI in FIG. 8 indicates the TYPE of stream: 01 = a TYPE A SOB; 02 = a TYPE B SOB; and 03 = TYPE C (the fourth type in FIG. 5). TYPE A is a stream whose stream structure is cognizable, and whose management information is managed on the PTM base. On the other hand, Type B is a stream whose structure is not cognizable and, hence, whose management information is managed on the PATS base. For this reason, Type A adopts a TMAP on the PTM base, and Type B adopts a TMAP on the PATS base. On the other hand, TYPE C adopts a TMAP on the PTM base, but management information is incompatible to ARIB. Furthermore, there are two cases: a case where a NORMAL flag is set in this field (ESOBI_GI in FIG. 8), and a case where it is set in ESI (ES_TY in FIG. 9).

To the ESOB_ESI in FIG. 9, ES_TY (information used to identify a video or audio stream or the like), ES_PID (PID of an ES), STREAM_TYPE (a stream type indicated in PMT), Es_Index (a COMPONENT_TAG value indicated by a component descriptor or a unique value appropriately assigned by this device), and Manufacturer DATA (a field where each manufacturer can freely set).

The Manufacturer_DATA can store attribute information of each stream. In case of a video stream, the Manufacturer_DATA can store video attribute information V_ATR exemplified in FIG. 9:

Video compression mode (the type of compression method: 1 = MPEG1, 2 = MPEG2, 3 = MPEG4_AVC, 4 = VC-1, ...),
Aspect Ratio (0 = 4 : 3, 1 = 16 : 9),
Source resolution (0 = 352*240 (288), 1 = 352*480 (576), 2 = 480*480 (576), 3 = 544*480 (576), 4 = 704×480 (576), 5 = 720*480 (576), 8 = 1280*720, 9 = 960*1080, 10 = 1280*1080, 11 = 1440*1080, 12 = 1920*1080, 16 = 640*480 (576), 17 = unspecified (Horizontal)*240 (288) (Vertical), 18 = unspecified (Horizontal)*480 (576) (Vertical), 19 = unspecified (Horizontal)*720 (Vertical), 20 = unspecified (Horizontal)*1080 (Vertical), and 1fh = unspecified,
Source picture progressive mode (0 = Interlace, 1 = Progressive, 3 = unspecified),
frame rate (24/1.001, 2 = 24, 3 = 25, 4 = 30/1.001, 5 = 30, 6 = 50, 7 = 60/1.001, 8 = 60, 0xf = unspecified), and the like.

Note that "unspecified" is set to describe it if the contents of an object cannot be examined when it is not determined based only on interpretation of PSI and SI. In ARIB, especially, since the vertical resolution alone is specified but the horizontal resolution is unspecified, only the vertical resolution can be described.

In case of an Audio stream, as exemplified in FIG. 9, the Manufacturer_DATA can be configured by audio attribute information A_ATR including Audio_Coding_Mode (0 = AC3, 2 = MPEG1 or MPEG2 without extension bitstream, 3 = MPEG2 with extension bitstream, 4 = L-PCM, 0x30 = MPEG2 AAC, 0x3f = unspecified), Sampling_frequency fs (0 = 48 kHz, 1 = 96 kHz, 2 = 192 kHz, 4 = 12 kHz, 5 = 24 kHz, 8 = 32 kHz, 9 = 44.1 kHz, 0xf = Unspecified), the number of audio channels (0 = 1ch: Mono, 1 = 2ch: Stereo, 2 = 3ch, 3 = 4ch, 4 = 5ch, 5 = 6ch, 6 = 7ch, 7 = 8ch, 9 = 2ch: Dual Mono, 0xf = unspecified), and the like.

However, in case of the first type in FIG. 5, there is no ESI, and reproduction is made using predetermined attributes. This means is effective when the source to be recorded is fixed, and attributes of a stream coming from that source are determined in advance. However, ESI is used when the attributes are unknown or a plurality of different types of streams are to be handled.

This embodiment proposes a new ESI structure. However, the conventional ISDB-compatible structure can be used at the same time. Which structure is to be used is determined by assuring a flag (NORMAL flag) in ESOB_GI or ES_TY in ESI, and that determination is made using this NORMAL flag. The NORMAL flag is information used to determine whether ESI is that of the conventional ARIB specification or of the new method proposed by this embodiment. In this way, when loading ESI upon reproduction, the scheme of that ESI can be determined.

The ESOB_TMAP includes ESOB_TMAP_GI and one or more pieces of ES_TMAP_GI (not shown). Note that the ESOB_TMAP_GI includes ADR_OFS (a packet group number (or LB address) from the head of a file to the head of an ESOB), and also includes, in case of the PTM base, ESOBU_PB_TM_RNG (ESOBU reproduction time range: 1 = 2s or less, 2 = 3s or less, 3 = 1s or less), ESOB_S_PKT_POS (the start position of the head of an ESOB in a packet group: $0 \leq ESOB\_S\_PKT\_POS \leq 169$), ESOB_E_PKT_POS (the end position of the head of an ESOB in a packet group: $0 \leq ESOB\_E\_PKT\_POS \leq 169$), ESOB_SZ (ESOB size), and ES_TMAP_GI_Ns (the number of ES_TMAPs that belong to the ESOB of interest).

Each ES_TMAPI_GI includes ESIN (the number of an ESI of a target ES of the TMAP of interest), ADR_OFS (logical addresses from the head of an ESOB file to the head of the ES of interest), ES_S_PTM (start PTM), ES_E_PTM (end PTM), ES_ESOBU_ENT_Ns (the number of ESOBU_ENTs), LAST_ESOBU_E_PKT_POS (position of the last ESOBU in a packet group), and STMAP_N (the number of a TMAP in the STMAPT, which belongs to the ES of interest: this number may be omitted when TMAPs are recorded in turn in each STMAPT).

An STMAPIT is recorded in an independent area (file). This STMAPIT includes STMAPITI, one or more pieces of STMAPI_GI, one or more ETMAP_SRPs, and a plurality of pieces of ETMAPI as many as the number of ETMAP_SRPs. The STMAPITI includes end address information of the STMAPIT, version information of the TMAP of interest, STMAP_SRP_Ns (or the number of pieces of TAMP_SRPI or that of TMAPI), update date and time information of the STMAP (the same value as in VMGI), and the number of pieces of STMAPI_GI. The STMAPI_GI includes the number of ETMAPI_SRPs which belong to the STMAPI_GI, and ETMAPs which belong to the STMAP are determined in the number sequence from the first one. The ETMAPI_SRP includes address information to ETMAPI, and the number of ESOBU_ENTs. Note that garbage data may be inserted among ESOBU_ENTs.

In case of the PATS base, the ESOB_TMAP_GI includes ADR_OFS (a packet group number (or LB address) from the head of a file to the head of an ESOB), AT_SOBU_TM (arrival time interval of ESOBUs: 0 = 1s, 1 = 2s), ESOB_S_PKT_POS (the start position of the head of an ESOB in a packet group: $0 \leq ESOB\_S\_PKT\_POS \leq 169$), ESOB_E_PKT_POS (the end position of the head of an ESOB in a packet group: $0 \leq ESOB\_E\_PKT\_POS \leq 169$), AT_SOBU_ENT_Ns (the number of AT_SOBU_ENTs which belong to the ESOB of interest), and ESOB_SZ (ESOB size). The edit processing is done for respective AT_SOBUs, and the adjustment processing is done based on PATS start time and PATS end time (CELLI).

Note that TMAPI information can be prevented from becoming extremely large by setting ESOBU/EVOBU PB TM RNG even when a video recording time increases. However, since the time interval between neighboring entries broadens, it is more likely to disturb smooth double-speed reproduction and the like.

The ESOBU_ENT on the PTM base includes end address information (LB units), from the head of the ESOBU, of the first reference picture (I-picture or the like) in the entry, an ESOBU reproduction time (the number of fields), an ESOBU size (the number of packet groups that belong to the ESOBU of interest), ESOBU_S_PKT_POS (the number of packets from the head of a packet group that stores the first packet of the ESOBU of interest), and the like.

In case of time search, an ESOBU corresponding to a target time is calculated by accumulating PB_TM data, and the reproduction start PTM is converted into the number of fields from the head of that ESOBU. Note that the target address is given by:

$$A = ESOB\_ADR\_OFS + ES\_ADR\_OFS \text{ of target ES}$$

$$+ \sum_{N=1}^{k-1} ESOBU\_SZ(N) \times 16 + 1$$

where K is the target ESOBU, and A is the target address. Furthermore, the first packet becomes a packet corresponding to the value of ESOBU_S_PKT_POS, and this address is accessed.

There are two types of AT_SOBU_ENTs on the PATS base, i.e., that in a packet unit and that in a packet group unit. In case of the packet unit, accurate addresses can be obtained, but the number of AT_SOBU_ENT data increases. In case of the packet group unit, the number of ESOBU_ENT data is small, but addresses can only specify packet groups.

In case of the packet unit, each AT_SOBU_ENT is configured by AT_ESOBU_SZ and AT_SOBU_S_PKT_POS. The AT_ESOBU_S_PKT_POS indicates the first packet position of the AT_SOBU in the packet group by the number of packets. In case of the packet group unit, each AT_SOBU_ENT is be configured by AT_ESOBU_SZ. In this case, AT_SOB_S_PKT_POS and AT_SOB_E_PKT_POS are fixed to zero.

The ESOB_TMAP_GI describes ADR_OFS, AT_SOB_SZ, AT_SOB_PKT_POS as values associated with those of the whole AT_SOB.

$$AT\_ADR\_E\_OFS$$
$$= AT\_SOB\_SZ - (AT\_ADR\_S\_OFS + \sum_{N=1}^{k-1} AT\_SOBU\_SZ(N) + 1)$$

Note that inequalities AT_SOB_SZ > AT_ADR_S_OFS, AT_SOB_SZ > AT_SOBU_SZ, and the like hold.

The ESOB SZ is the number of packet groups from a packet group to which the head of an AT_SOB belongs to that to which the end of the AT_SOB belongs. ESOBU_SZ is the number of packet groups from the first packet group of an ESOBU to the last packet group of the ESOBU. Each ESOBU_S_PKT_POS represents the difference between the divisions of the ESOBU and packet group using the number of packets. Time information is expressed by PATs to have ESOB_S_PATS as the ESOB start time, and ESOB_E_PATS as the end time, since it is on the PATS base. However, the ESOB_E_PATS is the PATS (arrival start time) of the last packet of the last packet group, and is not the last reception end time. The edit processing is done for respective ESOBUs, and the reproduction start time (CELL_S_PATS of CELLI) is designated. Since the edit processing is done for respective ESOBUs, each ESOB_S_PATS always matches the head of the ESOBU. The ADR_OFS indicates the LBN from the head of the file to the head of an ESOB.

FIG. 10 is an exemplary view explaining an example of the configuration of EX_ORG_PGCI and an EX_UD_PGCIT (playlist information) included in the HDVR_MG (or the HDVMG file in FIG. 3). PGC information (ORG_PGCI or UD_PGCI) is reproduction information. As in the normal VR format, ORG_PGC information is automatically generated by a device upon video recording and is set in the order of video recording. UD_PGC information is freely added by the user, and is generated according to a reproduction order. The UD_PGC information is called a playlist. The formats of these two pieces of information (ORG_PGCI and UD_PGCI) are common in PGC level.

Note that program information (PG information: EX_PGI) included in the PGC information (ORG_PGCI or UD_PGCI) saves update date and time information of this PG. This information can identify when this PG was edited. A PG number is an absolute number from the beginning of recording on this disc, and is an index number which remains unchanged even after other PGs are deleted.

Furthermore, in CELL information, a value indicating the differences of TYPE_A/B/C (see FIG. 5) are added to the CELL type, which is used to designate an ESOBI_SRP number, start time, end time, the ESI number of a default video stream to be reproduced, and the like. The start and end times can be expressed by either the reproduction time (in case of the PTM base) or PATS time (in case of the PATS base).

When time is designated by a reproduction time (a real time upon reproduction), the same access method as in the conventional VR is allowed. Since the user can designate a reproduction position using a reproduction time, a user's desire can be perfectly reflected. However, this method can be designated only when the stream contents can be sufficiently cognizable. If the contents of the recorded stream are not sufficiently cognizable, a time is inevitably designated using a transfer time unit.

If the recording position is designated using a reproduction time, reproduction cannot always be started from the head of I-picture data. If a frame at the reproduction start position is not that of I-picture, the following measure is taken. That is, decoding starts from the immediately preceding I-picture, and display of a reproduction video picture starts when the target frame is decoded. In this way, a picture can be presented to the user as if reproduction were started from the designated frame. By assigning a unique ID number (PG_INDEX) to each PG, the PG can be designated using the number which remains unchanged even when middle PGs are deleted. The CELL information is set with the ESTR_FI number to be reproduced and ESOBI_SRP number.

As for an ID to be referred to in the reproducing processing or the like, a method of setting the PID of a representative one of streams to be reproduced, a method of setting the ID of a component group in case of multi-view TV or the like, and a method of designating an ESI number are available (in case of the PID setting method, a method of describing the ID using 13-bit real data, a method of describing the order in the PMT, a method of describing the value of a component tag, and the like are available). Also, in still another method, a reference GRP number (GRP_SRP number) may be set to switch groups.

By assigning a unique ID number (PG_INDEX corresponding to EX_PGI#p and the like in FIG. 10: not shown) to each program, programs and cells can be designated using numbers which remain unchanged even when middle programs and cells are deleted. The cell information (EX_CI) in FIG. 10 is set with the file number (ESTR_FIN) of a stream to be reproduced, and search pointer number ESOB_SRPN of the corresponding ESOB. Furthermore, the EX_CI includes information C_EPI (Entry Point Information) of a cell entry point corresponding to each chapter.

Program information (each of EX_PGI#1 to EX_PGI#p) included in EX_PGC information in FIG. 10 saves update date and time information (PG_LAST_MOD_TM) of the program of interest. This information can identify when the program of interest was edited. In each EX_PGI, a field of primary text information (PRM_TXTI) used to describe a program name and the like is prepared. An item text (IT_TXT) field is assured in EX_TXTD_MG in FIG. 10 to save other kinds of text information, and saves other kinds of information (director name, leading actor name, ...). The EX_PGI of interest is set with a search pointer (SRP) number of the IT_TXT field which saves these kinds of information to establish a link. Furthermore, a program number is also set in IT_TXT data. Note that the program number is an absolute number from the beginning of recording on disc 100 in FIG. 1(a), and is an index number (PG_INDEX) which remains unchanged even after other programs are deleted.

The EX_PGI also includes a resume information field (PG_RSM_MRKI) (included in a playlist search pointer) to allow a description of a resume marker (a marker indicating the reproduction location upon interrupting reproduction) for each program as in the playlist. As information used to restart reproduction, a cell number CN, reproduction start point MRK_PT, and date and time information MRK_TM indicating the date and time of creation of that marker are set in the PG_RSM_MRKI (not shown). These pieces of information are used as title resume. The MRK_PT describes reproduction time PTM for a movie cell or TYPE A stream cell, or describes packet arrival time PATS for a TYPE B stream cell.

Furthermore, the EX_PGI includes a program representative picture information field (PG_REP_PICTI). This PG_REP_PICTI describes, as representative picture information (a marker of a picture to be displayed as a thumbnail on a title menu or the like) for each program, picture point PICT_PT, the number CN of a cell where the picture point exists, and the like. The PICT_PT describes reproduction time PTM of a representative picture for a movie cell or TYPE A stream cell, or describes packet arrival time PATS of a representative picture for a TYPE B stream cell.

Although not shown, there are two types of C_EPI in FIG. 10 for each cell type, i.e., a total of six types of C_EPI. M_CELL_EPI_TY_A includes a type (EPI_TY) of entry point information, and a reproduction time (EP_PTM) of the position to which an entry point is assigned. M_CELL_EPI_TY_B additionally includes PRM_TXTI (primary text information) in addition to the EPI_TY and EP_PTM.

STR_A_CELL_EPI_TY_A (ESOB TYPE A) includes a type (EPI_TY) of entry point information, and a reproduction time (EP_PTM) of the position to which an entry point is assigned. STR_A_CELL_EPI_TY_B further includes PRM_TXTI (text information) in addition to the EPI_TY and EP_PTM.

STR_B_CELL_EPI_TY_A (ESOB TYPE B) includes a type (EPI_TY) of entry point information, and a packet arrival time (EP_PATS) of the position to which an entry point is assigned. STR_B_CELL_EPI_TY_B further includes PRM_TXTI (text information) in addition to the EPI_TY and EP_PATS.

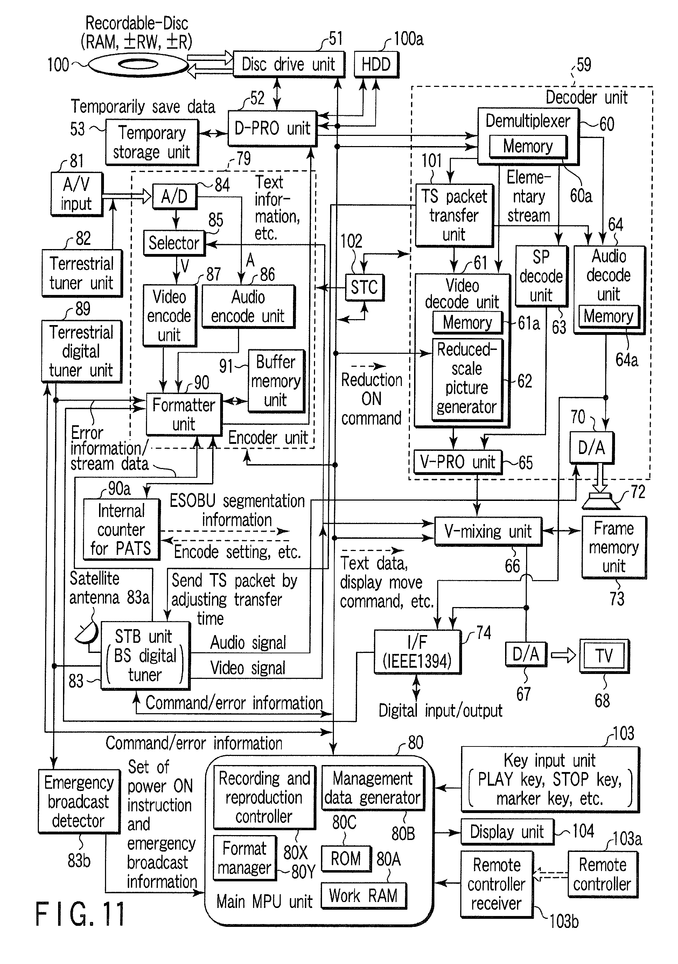

FIG. 11 is an exemplary block diagram explaining an example of an apparatus which records and reproduces AV information (digital TV broadcasting program or the like) on an information medium (optical disc, hard disc, or the like) using the data structure according to the embodiment. As shown in FIG. 11, this recording and reproduction apparatus comprises MPU unit 80, display unit 104, decoder unit 59, encoder unit 79, TV tuner unit 82, STC unit 102, D-PRO unit 52, temporary storage unit 53, disc drive unit 51, key input unit 103, video mixing unit 66, frame memory unit 73, TV digital-to-analog conversion unit 67, terrestrial digital tuner unit 89, IEEE 1394 (and/or HDMI) I/F unit 74, Ethernet® I/F unit (not shown), remote controller receiver 104, STB unit (BS digital tuner or the like) 83, emergency broadcast detection unit 83b, HDD unit 100a, and the like. This arrangement is configured by adding the functions of a streamer to a recordable/reproducible DVD recorder.

Encoder unit 79 comprises analog-to-digital conversion unit 84, video encode unit 87, audio encode unit 86, sub-picture encode unit (not shown), formatter unit 90, buffer memory unit 91, and the like. Decoder unit 59 comprises demultiplexer 60, video decode unit 61, sub-picture decode unit 63, audio decode unit 64, TS packet transfer unit 101, V-PRO unit 65, audio digital-to-analog conversion unit 70, and the like. Furthermore, antenna 83a for receiving digital broadcasting is connected to STB unit 83. Note that STC unit 102 is configured to count on a 27-MHz base.

The flow of signals upon recording is as follows. That is, formatter unit 90 packs TS packet data received by STB unit 83 (or terrestrial digital tuner 89) into packet groups and temporarily saves these packet groups on buffer memory unit 91. When the saved packet groups reach a predetermined size, they are recorded on disc 100 and/or HDD 100a. PATS internal counter 90a is connected to this formatter unit 90. The arrival time of each TS packet is counted by PATS counter 90a, and that count value is appended to the head of each TS packet when the packet is buffered in buffer memory unit 91. This counter 90a attains synchronization by finely adjusting count intervals based on PCR (or SCR) values, but never loads the PCR (or SCR) values unlike STC 102.

As the operations to be executed at that time, upon reception of TS packets, a packet group is formed every 170 packets, and a packet group header is generated. In this case, only the upper 2 bytes of the PATS of the first packet of the packet group are stored in the header (FIRST_PATS_EXT), and only the lower 4 bytes of each of other PATS data are saved together with the TS packet (in the PATS before the TS packet). An analog signal input from terrestrial tuner 82 or an line input is converted into a digital signal by analog-to-digital conversion unit 84. That digital signal is input to respective encode units. That is, a video signal is input to video encode unit 87, an audio signal is input to audio encode unit 86, and text data of, e.g., teletext broadcasting is input to the SP encode unit (not shown). In this case, the video signal is compressed by MPEG, the audio signal is compressed by MPEG audio, and the text data is compressed by runlength coding.

Each encoder unit (for VR) packs output compressed data to form 2048-byte packets and inputs them to formatter unit 90. Formatter unit 90 packs and multiplexes the packets as a program stream, and sends it to D-PRO unit 52.

D-PRO unit 52 forms ECC blocks for every 16 logical blocks, appends error correction data to them, and records the ECC packets on disc 100 (or HDD 100a) via disc drive unit 51. When disc drive unit 51 is busy due to seek, track jump, and the like, recording information is temporarily stored in temporary storage unit 53, and waits until disc drive unit 51 is ready. Furthermore, formatter unit 90 generates each segmentation information during video recording, and periodically sends it to MPU unit 80 (GOP head interrupt or the like). The segmentation information includes the number of packs of an EVOBU (ESOBU), the end address of reference picture (I-picture) data from the head of the EVOBU (ESOBU), the reproduction time of the EVOBU (ESOBU), and the like.

In the flow of signals upon reproduction, data are read out from disc 100 (or HDD 100a) by disc drive unit 51, undergo error correction by D-PRO unit 52, and are then input to decoder unit 59. MPU unit 80 determines the type of input data (i.e., VR or SR data) (based on the cell type in FIG. 5), and sets that type in decoder unit 59 before reproduction. In case of SR data, MPU unit 80 determines the PID to be reproduced based on the ESI number to be reproduced, determines the PIDs of items (video, audio, and the like) to be reproduced based on a PMT, and sets them in decoder unit 59. In decoder unit 59, demultiplexer 60 sends TS packets to the respective decode units based on the PIDs. Furthermore, demultiplexer 60 sends the TS packets to TS packet transfer unit 101, which transmits them to STB unit 83 (and IEEE1394 I/F unit 74) in accordance with their arrival times in the form of TS packets. Respective decode units 61 to 64 execute decoding, and digital-to-analog conversion unit 67 converts decoded data into an analog signal, thus displaying the signal on TV 68. In case of VR data, demultiplexer 60 sends data to respective decode units 61 to 64 according to the fixed IDs. Respective decode units 61 to 64 execute decoding, and digital-to-analog conversion unit 67 converts decoded data into an analog signal, thus displaying the signal on TV 68.

In the flow of signals upon recording, formatter unit 90 converts TS packet data received by STB unit 83 (or terrestrial digital tuner 89) into packet groups, and saves the packet groups in work RAM 91. When data stored in this work RAM reach a predetermined size (for one or an integer multiple of CDA size), they are recorded on disc 100 (and/or HDD 100a). As the operations to be executed at that time, upon reception of TS packets, a packet group is formed every 170 packets, and a packet group header (packet group header 161 in FIG. 1(h)) is generated. That is, the following operation is made.

1) A TS packet is received.

2) It is checked if the STC has reached an end (Wrap-around). If the STC has reached an end, a part (CNT_SEG information: CNT_SEGI) of management information is generated based on its position information. Note that the ESOBI in FIG. 7 includes discontinuity information ESOB_DCNI of ESOBs (not shown), and this ESOB_DCNI includes one or more pieces of CNT_SEGI. Each CNT_SEGI includes CNT_SEG_SZ (CNT_SEG size: the number of packet groups) and CNT_SEG_PKT_POS (the number of packets of the head position of the CNT_SEG in a packet group). From these pieces of information, whether or not the count operation of system time counter STC of the recording and reproduction apparatus has reached an end (Wrap-around) can be indicated. In this manner, the number of CNT_SEGs from the head of an ESOB is set in time information PTM to confirm in advance if STC wrap-around occurs, and such data can be used in TMAP calculations and the like.

3) If the packet of interest is the first one of a packet group, Header_ID: 0x00000fa5 is set; otherwise, the control advances to process 5).

4) The arrival time of the TS packet is used as PATS data, the lower 4 bytes of the PATS data are allocated before that TS packet, and the upper 2 bytes of the first PATS data are set in the packet group header (packet group header 161 in FIG. 1(h)) as FIRST_PATS_EXT. Then, the process advances to 6).

5) In the TS packet fetched in the TS packet data area, the lower 4 bytes of the PATS data are appended before that TS packet, and the TS packet is set in a packet group data area.

6) It is checked if a packet group is formed (if 170 TS packets are grouped). If a packet group is not formed yet, the process returns to 1). If the packet group is formed, CCI processing and MNFI processing are executed, and group data for one packet group are temporarily saved in the buffer RAM.

Upon reproduction, demultiplexer 60 analyzes pack data read out from disc 100 and/or HDD 100a. If a pack stores TS packets, demultiplexer 60 sends TS packets to TS packet transfer unit 101, and then sends them to decoders 61 to 64 to play them back. Upon transmitting TS packets to STB unit 83 (or upon transmitting them to an external device such as a digital TV or the like via IEEE1394 or the like), TS packet transfer unit 101 transfers only TS packets at the same time intervals as those upon arrival of these data. STB unit 83 decodes TS packets to generate an AV signal, and displays the AV signal on TV 68 or the like via a video encoder unit in a streamer.

The features of medium 100 (100a) used in the apparatus of FIG. 11 will be briefly summarized below. That is, this medium has management area 130 and data area 131. The data area separately records data as a plurality of object data (ESOB), and each object data includes a group of data units (ESOBUs). One data unit (ESOBU) includes packet groups each of which is formed by converting a MPEG-TS compatible digital broadcasting signal into TS packets and packing a plurality of packets (see FIG. 1). On the other hand, management area 130 has EX_PGC information (EX_PGCI) as information used to manage the reproduction sequence. This EX_PGC information includes cell information (EX_CI). Furthermore, management area 130 has information used to manage object data (ESOB).

The apparatus shown in FIG. 11 can make stream recording on medium 100 (HDD 100a) with the above data structure in addition to video recording. In this case, in order to extract program map table PTM and service information SI from a TS packet stream, MPU unit 80 is configured to have a service information extraction unit (not shown; firmware that forms management data generation unit 80B). Also, MPU unit 80 is configured to have an attribute information generation unit (not shown; firmware that partially forms management data generation unit 80B) that generates attribute information (PCR pack number, PCR LB count number, and the like) based on information extracted by the service information extraction unit. MPU unit 80 further comprises firmware that implements the processes of FIG. 21 and the like as format management unit 80Y.

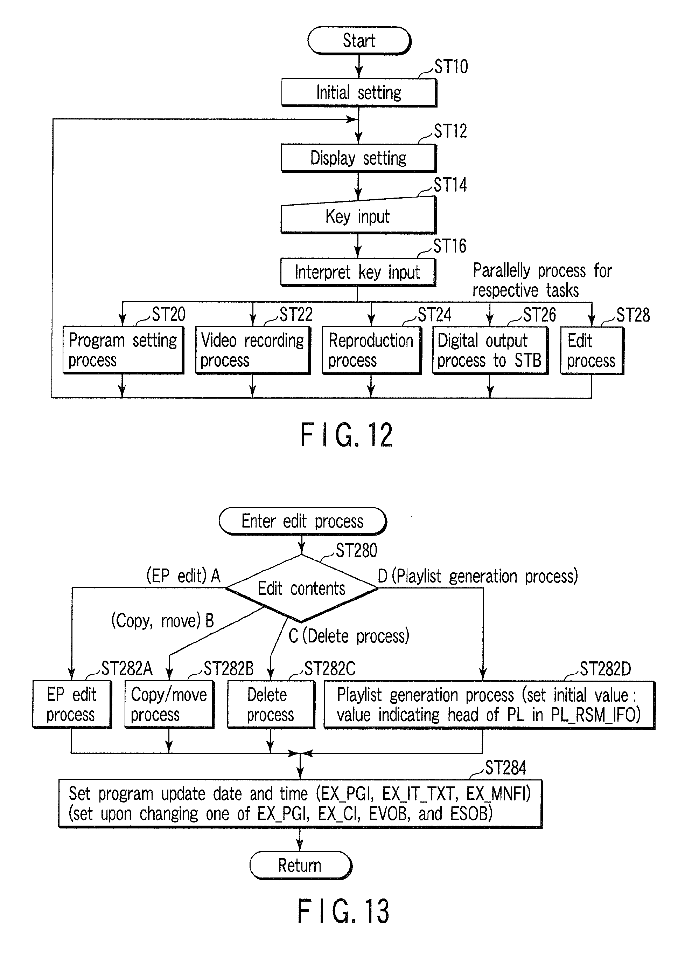

FIG. 12 is an exemplary flowchart explaining an example of the overall operation of the apparatus shown in FIG. 11. In this case, data processes include five different processes, i.e., a video recording process, reproducing process, data transfer process (a digital output process to the STB or the like), program setting process, and edit process. For example, when the power switch of the apparatus in FIG. 11 is turned on, MPU unit 80 makes initial settings (upon factory shipment or after user's settings) (ST10). MPU unit 80 also makes display settings (ST12). MPU unit 80 then checks if an emergency broadcasting flag and program recording flag are set. If these flags are set (YES in ST13A), MPU unit 80 makes program settings of the program recording, and sets to start a video recording process at a predetermined time (ST13B). If neither the emergency broadcasting flag nor program recording flag are set, MPU unit 80 checks if a recorded flag of emergency broadcasting is set. If that flag is set (YES in ST13C), MPU unit 80 executes a display process emergency broadcasting if the user does nothing (ST13D). If the recorded flag of emergency broadcasting is not set (NO in ST13C), MPU unit 80 enters a user's operation waiting state.

If the user has made a key input from key input unit 103 or remote controller 103a in FIG. 11 (ST14), MPU unit 80 interprets the contents of that key input (ST16). The following five data processes are executed as needed in accordance with this input key interpretation result. That is, if the key input is, for example, a key operation made to set timer program recording, MPU unit 80 enters a program setting process (ST20). If the key input is a key operation made to start video recording, MPU unit 80 enters a video recording process (ST22). If the key input is a key operation made to start reproduction, MPU unit 80 enters a reproducing process (ST24). If the key input is a key input made to output digital data to the STB, MPU unit 80 enters a digital output process (ST26). If the key input is a key operation of an edit process, MPU unit 80 enters the edit process (ST28).

MPU unit 80 parallelly executes the processes in blocks ST20 to ST28 as needed for respective tasks. For example, MPU unit 80 parallelly executes the process for outputting digital data to the STB (ST26) during the reproducing processing (ST24). Or MPU unit 80 can parallelly execute the new program setting process (ST20) during the video recording processing (ST22) which is not timer program recording. Or by utilizing the feature of disc recording that allows high-speed access, MPU unit 80 can parallelly execute the reproducing process (ST24) and digital output process (ST26) during the video recording process (ST22). Also, MPU unit 80 can parallelly execute the disc edit process (ST28) during video recording on the HDD.

FIG. 13 is an exemplary flowchart explaining an example of the edit process (ST28). When the control enters the edit process, the process branches to one of five processes (one of A to E) (ST280) in accordance with the edit contents. Upon completion of one of an entry point menu process (ST282A), copy and move process (ST282B), delete process (ST282C), and playlist generation process (ST282D), and entry point automatic generation process (ST282E: not shown), MPU unit 80 sets the program update date and time by this edit process in respective pieces of management information (program information EX_PGI, item text information EX_IT_TXT, manufacturer information EX_MNFI) (ST284).

When one of the program information EX_PGI, cell information EX_CI, or EVOB or ESOB data has been changed, MPU unit 80 may set this program update date and time. When EVOBI and/or ESOBI have/has been changed, MPU unit 80 can set the edit times/time (EDIT_TIME) of the EVOBI and/or ESOBI in ESOB_EDIT_TIME (not shown) or the like. Alternatively, MPU unit 80 may set this program update date and time.

In this connection, in the process in block ST284, MPU unit 80 may set the manufacturer ID of the device that has made the operation in one of blocks ST282A to ST282D in an editor ID (LAST_MNF_ID: not shown) in management information (VMG). Every time one of the PGI, CI, and SOB (or VOB) has been changed, MPU unit 80 can set (or update) this editor ID to the ID information of the device used at that time.

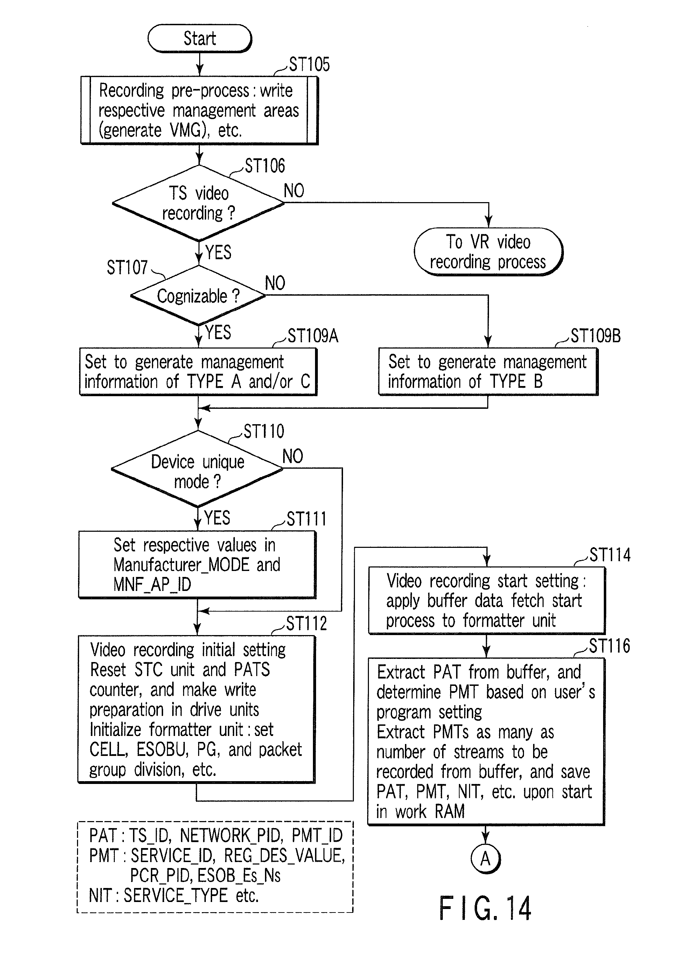

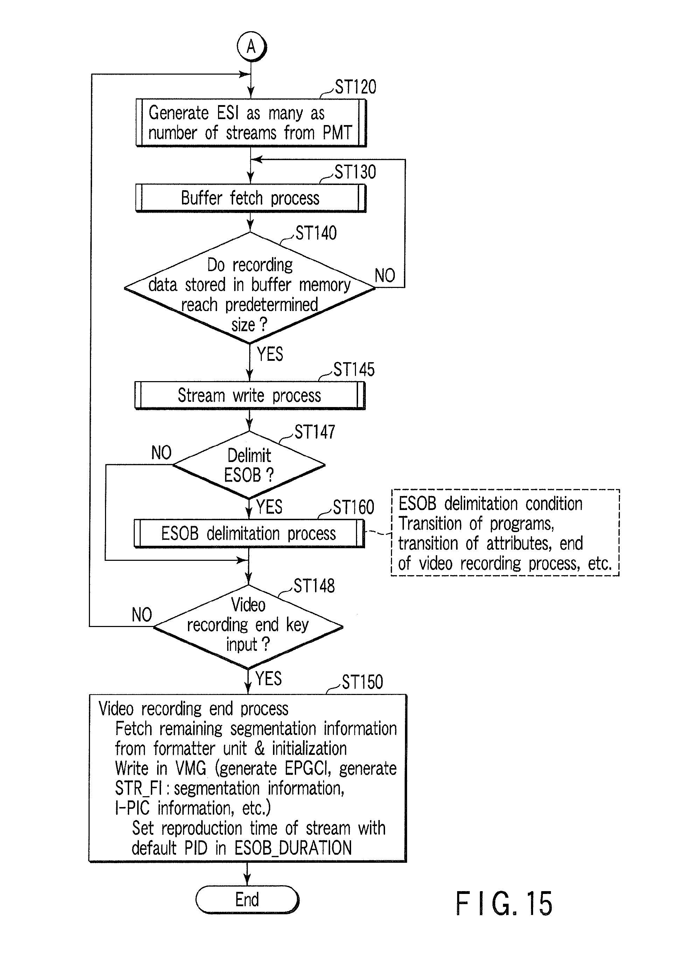

FIGS. 14 and 15 are flowcharts explaining an example of the video recording operation. Data processes upon video recording of the apparatus shown in, e.g., FIG. 11 are as follows.

d1) MPU unit 80 allows the user to determine a program to be recorded using EPG (Electronic Program Guide) in the program setting process, starts reception of that program, and executes video recording of the determined program.

d2) Upon reception of a recording command from key input unit 103, MPU unit 80 loads management data from disc 100 (or HDD unit 100a) via disc drive unit 51 and determines a write area. At this time, MPU unit 80 checks the file system to determine whether or not to proceed with video recording. If video recording cannot be proceeded, MPU unit 80 displays a message that advises accordingly for the user and aborts the video recording process. On the other hand, if video recording can be proceeded, MPU unit 80 executes a pre-video recording process (ST105). In this processing, MPU unit 80 determines the recording position, generates management information (HDVR_ MG, etc.), and writes required information in respective management areas. In this case, if data to be recorded is not digital broadcasting data (e.g., an analog video input or analog TV broadcasting signal) (NO in ST106), MPU unit 80 can adopt video recording (VR) as the recording format in place of stream recording (SR). In this case, the process branches to a VR video recording process.

d3) If data to be recorded is digital broadcasting data (YES in ST106), MPU unit 80 checks if the stream to be recorded is cognizable. If the stream to be recorded is cognizable (YES in ST107), MPU unit 80 makes settings to generate management information as a PTM-based stream of TYPE A and/or TYPE B (ST109A); otherwise (NO in ST107), it makes settings to generate management information as a PATS-based B stream (ST109B).

After the setting, MPU unit 80 detects if the stream to be handled is one in a device unique mode. If the apparatus in FIG. 11 supports stream recording of a manufacturer unique system, and the user sets the stream recording mode of the manufacturer unique system (YES in ST110), MPU unit 80 sets corresponding values in Manufacturer_MODE and MNF_AP_ID shown in FIG. 6 and the like (ST111).

After that or if the stream recording mode of the manufacturer unique system is not set (NO in ST110), MPU unit 80 sets the write start address of stream data (video data and the like) in disc drive unit 51, thus preparing for data recording (ST112).

d4) In this preparation process, MPU unit 80 resets the count time of STC unit 102. Note that STC unit 102 is a system timer, and video recording and/or reproduction are/is done with reference to this STC value.

d5) MPU unit 80 loads the PAT of a program to be recorded to determine the PID used to fetch the PMT of the target program. Then, MPU unit 80 loads the target PMT to determine the PIDs of data (video, audio) to be decoded (to be recorded). At this time, MPU unit 80 saves the PAT and PMT in its work RAM unit 80A, and writes them (PAT, PMT) in the management information (HDVR_MG). At this time, MPU unit 80 writes HDVMG file data in the file system (see FIG. 3), and writes needed information in VMGI (HDVR_MGI in FIG. 6).

d6) MPU unit 80 makes video recording settings in respective units (ST114). At this time, MPU unit 80 makes segmentation settings of respective data and reception settings of TS packets in formatter unit 90. Also, MPU unit 80 sets the PID of data to be recorded to record only a target stream. Furthermore, MPU unit 80 sets buffer 91 to start holding TS packets (ST116). Then, formatter unit 90 starts its operation as follows.

d7) Formatter unit 90 generates ESOB_ESI based on the PMT (ST120).

d8) Next, formatter unit 90 fetches a TS packet stream to be recorded onto buffer 91 (ST130). If data stored in buffer 91 reaches a predetermined size (YES in ST140), formatter unit 90 executes an ECC process via D-PRO unit 52, and records the data that have undergone the ECC process on disc 100 (and/or HDD 100a) (ST145).

d9) During video recording, formatter unit 90 saves segmentation information in work RAM 80A of MPU unit 80 periodically (before its buffer RAM 91 becomes full of data). The segmentation information to be saved is ESOBU segmentation information, which includes the ESOBU start address, ESOBU pack length, I-picture (reference picture) end address, the ESOBU arrival time (Arrival TimeStamp: ATS), or the like.

d10) After the segmentation information is saved in work RAM 80A, MPU unit 80 checks if ESOB data are to be delimited. If ESOB data are to be delimited (YES in ST147), MPU unit 80 executes an ESOB delimitation process (ST160).

d11) MPU unit 80 checks if video recording is to end (if the user has pressed a video recording end key or if no recordable space of the disc (disc 100 or HDD 100a) remains). If video recording is to end (YES in ST148), MPU unit 80 fetches the remaining segmentation information from formatter unit 90, and adds the fetched information to work RAM 80A. MPU unit 80 records these data in management data (VMGI or HDVR_MGI), records the average recording rate upon video recording, and further records the remaining information in the file system (ST150).

d12) If video recording is not to end (NO in ST148), the process returns to d7) to continue the data fetch and write processes.

In order to display the contents of stream data, whose video recording is in progress, on the TV or the like, MPU unit 80 sends the stream data to be recorded to decoder unit 59 simultaneously with D-PRO unit 52, so as to simultaneously monitor video recording. In this case, MPU unit 80 makes settings upon reproduction in decoder unit 59, which then automatically executes a reproducing process. D-PRO unit 52 forms ECC groups by combining, e.g., every 16 packs of stream data to be recorded, appends ECC data to each group, and sends them to disc drive unit 51 (and/or HDD 100a). When disc drive unit 51 is not ready to record on disc 100, D-PRO unit 52 transfers the ECC groups to temporary storage unit 53 and waits until disc drive unit 51 is ready to record. When disc drive unit 51 is ready, D-PRO unit 52 starts recording onto disc 100. As temporary storage unit 53, a large-capacity memory is assumed since it holds recording data for several minutes or longer by high-speed access. Note that MPU unit 80 is directly connected to D-PRO unit 52 via a microcomputer bus to make read and write accesses to the file management area and the like on disc 100.

The flow of signals upon recording can be briefly summarized as follows. That is, formatter unit 90 converts TS packet data received by STB unit 83 (or terrestrial digital tuner 89) into packet groups, and saves the packet groups in buffer 91. When data stored in this buffer 91 reach a predetermined size (for one or an integer multiple of CDA size), formatter unit 90 records them on the disc (disc 100 and/or HDD 100a).

The flow of the processes upon recording may also be as follows.

a1) MPU 80 allows the user to determine a program to be recorded using EPG (Electronic Program Guide) in the program setting process, starts reception of that program, and executes video recording of the determined program.

a2) Upon reception of a recording command from key input unit 103, MPU unit 80 loads management data from disc drive unit 51 and determines a write area. At this time, MPU unit 80 checks the file system to determine whether or not to proceed with video recording. If video recording can be proceeded, MPU unit 80 determines the recording position; otherwise, it displays a message that advises accordingly for the user and aborts the video recording process.

a3) MPU unit 80 makes setting in a management area to write data in the determined area, and sets the write start address of video data in disc drive unit 51, thus preparing for data recording.

a4) MPU unit 80 resets the count time of STC unit 102. Note that STC unit 102 is a system timer, and video recording and/or reproduction are/is done with reference to this STC value.

a5) MPU unit 80 loads the PAT of a program to be recorded to determine the PID used to fetch the PMT of the target program. Then, MPU unit 80 loads the target PMT to determine the PIDs of data (video, audio) to be decoded (to be recorded). At this time, MPU unit 80 saves the PAT and PMT in its work RAM unit 80A, and writes them in the management information. MPU unit 80 writes VMG file data in the file system, and writes needed information in VMGI.

a6) MPU unit 80 makes video recording settings in respective units. At this time, MPU unit 80 makes segmentation settings of respective data and reception settings of TS packets in formatter unit 90. Also, MPU unit 80 sets the PID of data to be recorded to record only a target video stream. Furthermore, MPU unit 80 sets buffer 91 to start holding TS packets.

a7) Formatter unit 90 generates ESOB_ESI based on the PMT.

a8) If data stored in buffer 91 reaches a predetermined size, formatter unit 90 executes an ECC process via D-PRO unit 52, and records data on disc 100.

a9) During video recording, formatter unit 90 saves segmentation information in work RAM 80A of MPU unit 80 periodically (before its buffer RAM 91 becomes full of data). The segmentation information to be saved is ESOBU segmentation information, which includes the ESOBU start address, ESOBU pack length, I-picture end address, the packet arrival time (PATS), or the like.

a10) MPU unit 80 checks if ESOB data are to be delimited. If ESOB data are to be delimited, MPU unit 80 executes an ESOB delimitation process.

a11) MPU unit 80 checks if video recording is to end (if the user has pressed a video recording end key or if no recordable space remains). If video recording is to end, MPU unit 80 fetches the remaining segmentation information from the formatter unit, and adds the fetched information to the work RAM. MPU unit 80 records these data in management data (VMGI), records the average recording rate upon video recording, and further records the remaining information in the file system.

a12) If video recording is not to end, the process returns to a7) to continue the data fetch and write processes.

In order to make a display on TV 68 (to monitor the recorded contents), MPU unit 80 sends packets to decoder unit 59 simultaneously with D-PRO unit 52, so as to play them back. In this case, MPU unit 80 makes settings upon reproduction in decoder unit 59, which then automatically executes a reproducing process.

D-PRO unit 52 forms ECC groups by combining, e.g., every 16 packs, appends ECC data to each group, and sends them to disc drive unit 51. When disc drive unit 51 is not ready to record on disc 100, D-PRO unit 52 transfers the ECC groups to temporary storage unit 53 and waits until disc drive unit 51 is ready to record. When disc drive unit 51 is ready, D-PRO unit 52 starts recording onto disc 100. As temporary storage unit 53, a large-capacity memory is assumed since it holds recording data for several minutes or longer by high-speed access. MPU unit 80 can read or write the file management area or the like on disc 100 by accessing D-PRO unit 52 via an internal bus.

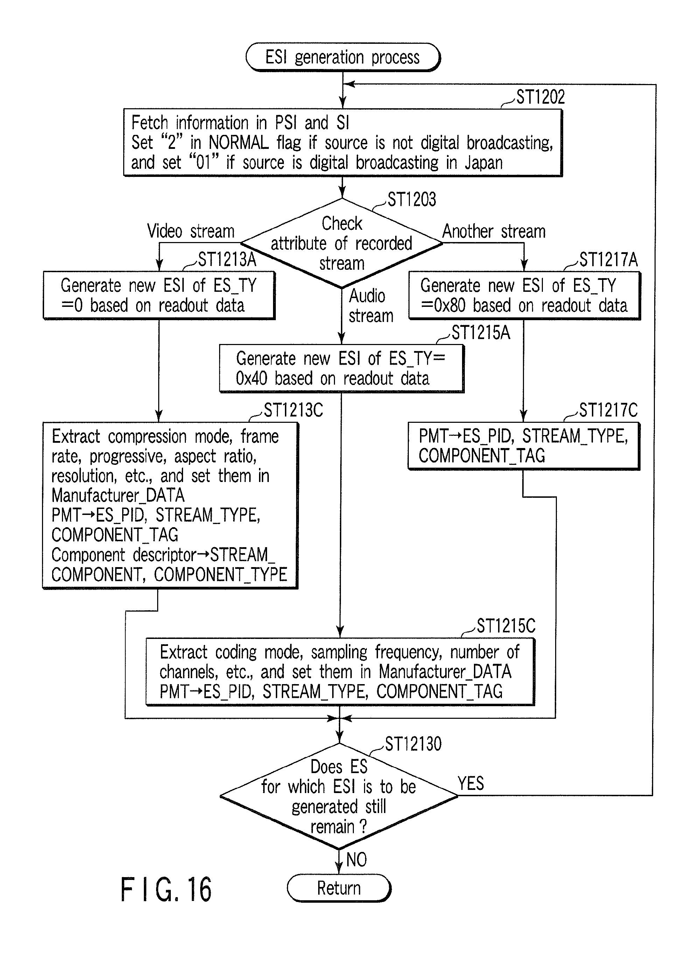

FIG. 16 is an exemplary flowchart explaining an example of the contents of the stream information (ESI) generation process (ST120).

h1) Formatter unit 90 fetches information of PSI and SI and checks their contents. As a result, if it is determined that the stream source is not digital broadcasting, formatter unit 90 sets "02" in the NORMAL flag in FIG. 8. If the stream source is digital broadcasting in Japan, formatter unit 90 sets "01" in the NORMAL flag (ST1202).

h2) Formatter unit 90 repeats h4) and h5) in correspondence with the number of set streams (in case of YES in ST1230).

h3) Formatter unit 90 checks a stream type based on PSI and SI (ST1203) to determine if the stream of interest is a video or audio stream, or another type of stream to branch the control to the next stream check processes.

h4) In this case, formatter unit 90 categorizes the stream type to MPEG1 video, MPEG2 video, MPEG1 audio, MPEG2 audio, ..., and checks internal data depending on the determined type to read out respective kinds of attribute information.

h5) In case of a video stream (ST1213A), formatter unit 90 sets ES_TY = 0, and also sets respective kinds of attribute information (especially, it extracts resolution data, aspect information, and the like) to generate V_ATR (ST1213C). The process then advances to h8).

h6) In case of an audio stream (ST1215A), formatter unit 90 sets ES_TY = 0x40. Formatter unit 90 then sets respective kinds of attribute information (especially, it extracts the coding mode, sampling frequency, the number of channels, and the like) to generate A_ATR and sets the generated attribute information in Manufacturer_DATA in FIG. 9 (ST1215C). The process then advances to h8).

h7) In case of another kind of stream, (ST1217A) formatter unit 90 sets ES_TY = 0x80, and also sets respective kinds of attribute information (ST1217C). The process then advances to h8).

h8) Formatter unit 90 checks if streams for which ESI is to be generated still remain. If such streams remain, the process returns to check the next stream (NO in ST1230).

The flow of the ESOB_ESI setting process may also be as follows.

b1) Formatter unit 90 examines PSI and SI to check the number of set streams.

b2) Formatter unit 90 repeats b4) and b5) in correspondence with the number of set streams.

b3) Formatter unit 90 checks a stream type based on PSI and SI to determine if the stream of interest is a video or audio stream, or another type of stream to branch the control to the next stream check processes. In this case, if the stream source is not digital broadcasting in Japan, formatter unit 90 sets "02" in the NORMAL flag and executes processes in b4) and subsequent steps. If the stream source is digital broadcasting in Japan, formatter unit 90 sets "01" in the NORMAL flag and executes the conventional process.

b4) Formatter unit 90 categorizes the stream type to MPEG1 video, MPEG2 video, MPEG1 audio, MPEG2 audio, ..., and checks internal data depending on the determined type to read out respective kinds of attribute information. In case of a video stream, formatter unit 90 sets ES_TY = 0, and also sets respective kinds of attribute information (especially, it extracts resolution data, aspect information, and the like) to set the these values in Manufacturer_DATA. The process then returns to b2).

b5) In case of an audio stream, formatter unit 90 sets ES_TY = 0x40, and sets respective kinds of attribute information (especially, it extracts the coding mode, sampling frequency, the number of channels, and the like) to set the these values in Manufacturer DATA. The process then returns to b2).

b6) In case of another kind of stream, formatter unit 90 sets ES_TY = 0x80 and respective kinds of attribute information. The process then returns to b2).

b7) Formatter unit 90 sets new ESI based on the attribute information, and the process advances to check the next stream.

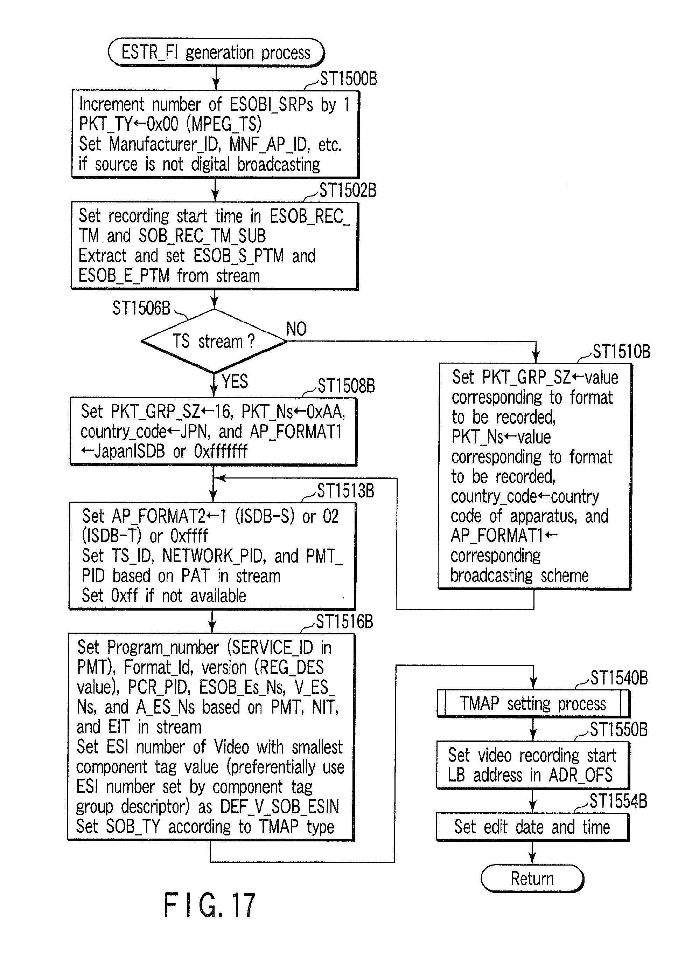

FIG. 17 is an exemplary flowchart explaining an example of stream file information (ESTR_FI) generation processing in the video recording end processing (ST150) .

j1) MPU unit 80 increases the number of search pointers (ESOBI_SRP) by one to add another ESOBI, assures an area for that ESOBI, and sets "0x00" in PKT_TY in case of MPEG-TS. If the source is not digital broadcasting, MPU unit 80 sets Manufacturer_ID, MNF_AP_ID, and the like in correspondence with that source (ST1500B).

j2) MPU unit 80 sets the video recording time in ESOB_REC_TM and ESOB_REC_TM_SUB (ST1502B). Note that the internal clock of the apparatus is set and corrected based on a TDT (Time Data Table), so that an accurate time can always be obtained.

j3) In this case, MPU unit 80 extracts ESOB_S_PTM and ESOB_E_PTM data from the stream, and checks STC discontinuity information to set the start PTM and end PTM of an ESOB corresponding to the ESOBI added in j1) (ST1502B).

j4) If the stream type is a TS stream (ARIB, DVB) (YES in ST1506B), MPU unit 80 sets "188" in AP_PKT_SZ and "16" in PKT_GRP_SZ (ST1508B); otherwise (NO in ST1506B), MPU unit 80 sets values suited to the broadcasting scheme (ST1510B). For example, in block ST1508A MPU unit 80 sets JPN (Japan) as country_code, and JapanISDB as AP_FORMAT1. Or in block ST1510B, MPU unit 80 sets the country code (e.g., USA) of the apparatus of interest as country_code, and the corresponding broadcasting scheme (e.g., ATSC) as AP_FORMAT1.

If the stream source is not digital broadcasting or if a stream is to be recorded based on a system unique to a manufacturer, MPU unit 80 sets an manufacturer ID (in case of a single manufacturer, e.g., TOSHIBO: in case of not a single manufacturer but a joint ID of a manufacturer group, e.g., TOSHIBO & MEC), sets data unique to the manufacturer in Manufacturer_DATA, and sets values such as a source code (e.g., a digital camera, digital VTR) and the like in MNF_AP_ID.

j5) MPU unit 80 checks if PSI information and SI information are valid. If the PSI information and SI information are valid (that is, a known stream), MPU unit 80 sets TS_ID, NETWORK_PID, and PMT_ID (the PID of PTM data used by the ESOB of interest: there are two description methods of the PID: a method of describing the PID using 13-bit real data, and a method of describing the order in the PMT) based on PAT data. Also, MPU unit 80 sets, in AP_FORMAT_2, ISDB_S in case of satellite broadcasting (BS), ISDB_T in case of terrestrial digital broadcasting, or "0xffff" (or 0x0000) in case of a manufacturer unique stream. If the PSI information and SI information are invalid (i.e., an unknown stream), MPU unit 80 sets "1" in ESOB_TY: b12 or it sets 0xff in respective values (ST1513B), and the process advances to j9).

j7) MPU unit 80 sets Program_Number (SERVICE_ID in PTM), PCR_PID, and the like based on PMT, NIT, and EIT data in the stream. Furthermore, as for FORMAT_ID and VERSION, MPU unit 80 sets values for a default scheme in the device in case of the built-in tuner or Registration_Descriptor values sent via a digital input in case of an external digital input. Also, MPU unit 80 sets ESOB_TY according to the TMAP type (ST1516B).

j9) MPU unit 80 executes a TMAP setting process (ST1540B), and generates TMAPI for each stream based on each segmentation information.

j10) Subsequently, MPU unit 80 sets the video recording start LB address in ADR_OFS (ST1550B), and also a default PID. Note that the default video PID corresponds to that with a smallest component tag value or the ESI number of a video stream corresponding to a component tag described in a main component group in case of multi-view TV.

j11) Then, MPU unit 80 sets an edit date and time (ST1554B).

The flow of the ESTR_FI generation process may also be as follows.

c1) MPU unit 80 increases the number of search pointers SRP by one to add another ESOBI, assures an area for that ESOBI, and sets 0: MPEG-TS in PKT_TY.

c2) MPU unit 80 sets the video recording time in ESOB_REC_TM. Note that the internal clock of the apparatus is set and corrected based on a TDT (Time Data Table), so that an accurate time can always be obtained.

c3) MPU unit 80 sets the start PTM and end PTM.

c4) If the stream type is a TS stream (ARIB, DVB), MPU unit 80 sets "188" in AP_PKT_SZ and "16" in PKT_GRP_SZ; otherwise, it sets values suited to the broadcasting scheme (in case of Japan, country_code ← JPN, AP_FORMAT_1 ← JapanISDB).

If the stream source is not digital broadcasting or if a stream is to be recorded based on a system unique to a manufacturer, MPU unit 80 sets an manufacturer ID (in case of a single manufacturer, e.g., TOSHIBO: in case of not a single manufacturer but a joint ID of a manufacturer group, e.g., TOSHIBO & MEC), sets data unique to the manufacturer in Manufacturer_DATA, and sets values such as a source code (e.g., a digital camera, digital VTR) and the like in MNF_AP_ID.

c5) MPU unit 80 sets MPEG_TS in PKT_TY.

c6) MPU unit 80 checks if PSI information and SI information are valid. If the PSI information and SI information are invalid, MPU unit 80 sets "1" in ESOB_TY: b12 or it sets 0xff in respective values, and the process advances to c9).

c7) MPU unit 80 sets TS_ID, NETWORK_PID, and PMT_ID (the PID of PTM data used by the ESOB of interest) based on PAT data. Also, MPU unit 80 sets, in AP_FORMAT_2, ISDB_S in case of BS, ISDB_T in case of terrestrial, or "0xffff" (or 0x0000) in case of a manufacturer unique stream.

c8) MPU unit 80 sets Program_Number (SERVICE_ID in PTM), PCR_PID, and the like based on PMT data. Furthermore, as for FORMAT_ID and VERSION, MPU unit 80 sets values for a default scheme in the device in case of the built-in tuner or Registration_Descriptor values sent via a digital input in case of an external digital input. In case of an unknown stream, MPU unit 80 sets 0xFF MPU unit 80 sets SOB_TY according to the TMAP type.

c7*) Furthermore, MPU unit 80 sets the number of recorded ESs, the number of video ESs, and the number of audio ESs. (The PMT is set with information: the number of all ESs which are broadcast. However, since all ESs are not always be recorded upon video recording, the number of recorded ESs is set.)

c8*) MPU unit 80 sets the video recording start LB address in ADR_OFS, and also a default PID. Note that the default video PID corresponds to that with a component tag value = "00" or the ESI number of a video stream corresponding to a component tag described in a main component group in case of multi-view TV.

c9) MPU unit 80 generates TMAPI for each stream based on each segmentation information.

c10) MPU unit 80 sets an edit date and time.

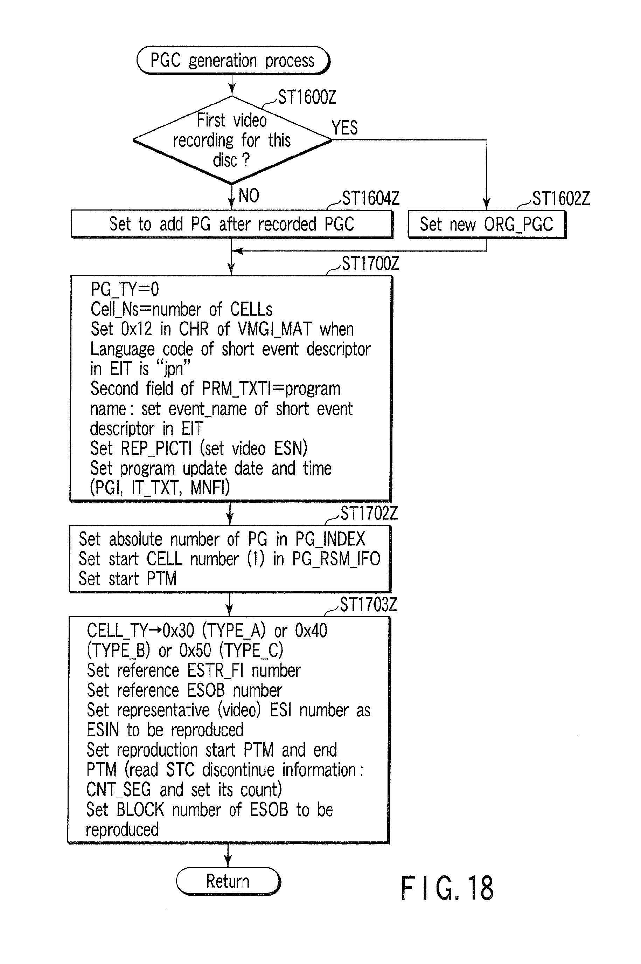

FIG. 18 is an exemplary flowchart explaining an example of the program chain (PGC) generation process (including the program setting process) in the video recording end process (ST150). An example of the PGC generation process will be described below.

q1) MPU unit 80 checks if a disc of interest undergoes the first video recording. If the disc of interest undergoes the first video recording (YES in ST1600Z), MPU unit 80 generates a new ORG_PGC (ST1602Z); otherwise (NO in ST1600Z), it makes a setting to add program PG after the already recorded PGC (ORG_PGC) (ST1604Z).

q2) MPU unit 80 sets erase permission: 0 in PG_TY, the number of CELLs in Cell_Ns, and also the video ESI number (ST1700Z).

q3) In the setting of block ST1700Z, if the digital broadcasting data to be recorded is ARIB, and if language_code in a short event descriptor in an EIT is "jpn", MPU unit 80 sets "0x12" in CHR in VMG_MAT, EVENT_NAME in the second field of PRM_TXTI, and representative picture information in REP_PICTI.

q4) MPU unit 80 sets the absolute number of PG in PG_INDEX to allow another application software or the like to refer to each PG (ST1702Z). In this case, MPU unit 80 sets the start cell number and start time (start PTM) in resume information (PG_RSM_IFO).

q5) MPU unit 80 sets information indicating a streamer in CELL_TY (e.g., cell type included in cell information EX_CI in FIG. 10) (ST1703Z).

q6) In the setting of block ST1703Z, MPU unit 80 further sets the reference ESOB number, the representative (video) ES number (ESIN) as the ES to be reproduced, and the number of pieces of entry point information EPI (FIG. 10), reproduction start and end PTMs, and entry points EP. Furthermore, MPU unit 80 reads discontinuous segments CNT_SEG as STC discontinuity information, sets the number of CNT_SEGs in a given field of management information (e.g., CNT_SEGN), and also sets the block number of the ESOB to be reproduced.

q7) Moreover, in the setting of block ST1703Z, MPU unit 80 may set start information in RG_RSM_INF (reproduction start PTM, video ESI number, audio ESI number, main/sub information of Dual-Mono, etc.) so that reproduction can start from the head of the program. The factors of automatic EP assignment in the video and time relationships are a constant time and a video mode change (an aspect ratio, and large motion vectors), and the first packet (the first packet of a sequence header, the first packet of I-PIC) of the first packet (Unit Start Indicator) GOP of a video frame is combined with these conditions. Furthermore, the factors of automatic EP assignment in the audio relationship are a change in audio (a change in audio volume or the like)/audio mode (ST/MONO), and the first packet (Unit Start Indicator, frame header) of an audio frame is combined with these conditions.

The flow of the PGC generation process may be as follows.

e1) MPU unit 80 checks if a disc of interest undergoes the first video recording. If the disc of interest undergoes the first video recording, MPU unit 80 generates a new ORG_PGC; otherwise, it makes a setting to add a program after that ORG_PGC.

e2) MPU unit 80 sets erase permission: 0 in PG_TY, and the number of CELLs in Cell_Ns.

e3) In case of ARIB, if language_code in a short event descriptor in an EIT is "jpn", MPU unit 80 sets "0x12" in CHR in VMG_MAT, EVENT_NAME in the second field of PRM_TXTI, and representative picture information in REP_PICTI (it also sets the video ESI number).

e4) MPU unit 80 sets the absolute number of PG in PG_INDEX to allow another application software or the like to refer to each PG. Furthermore, MPU unit 80 records this PG update date and time information. At this time, if there are MNFI and IT_TXT supported by this device (with the same manufacturer code), MPU unit 80 also sets the update date and time information of the corresponding data.

e5) MPU unit 80 sets manufacturer unique information in MNFI.

e6) MPU unit 80 sets information indicating a streamer in CELL_TY (CELLI).

e7) MPU unit 80 sets the reference ESOB number, the representative (video) ES number (ESIN) as the ES to be reproduced, and the number of pieces of EPI, reproduction start and end $PTM_S$, and entry points (EP). Furthermore, MPU unit 80 reads discontinuous segments CNT_SEG as STC discontinuity information, sets the number of CNT_SEGs in a given field of management information (e.g., CNT_SEGN), and also sets the block number of the ESOB to be reproduced.

e8) MPU unit 80 may set start information in PG_RSM_INF (reproduction start PTM, video ESI number, audio ESI number, main/sub information of Dual-Mono, etc.) so that reproduction can start from the head of the program.

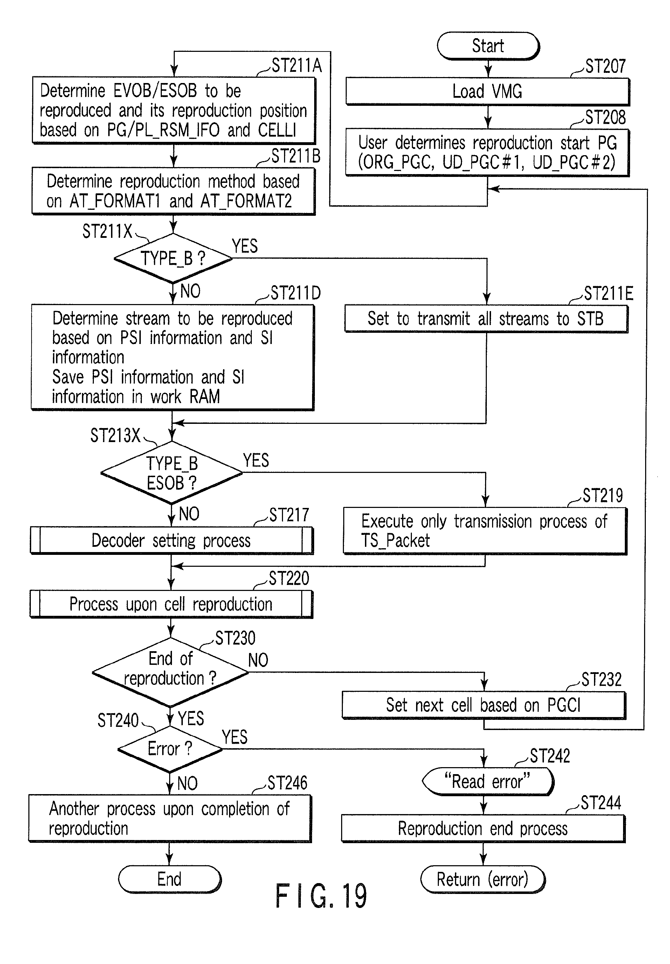

FIG. 19 is an exemplary flowchart (overall reproducing operation flow) explaining an example of the reproducing operation. The data processes upon reproduction are executed as follows.

r1) MPU unit 80 checks if the disc to be reproduced is a recordable/rewritable disc (R, RW, RAM). If the disc to be reproduced is not a recordable/rewritable disc, MPU unit 80 returns a message that advises accordingly, and ends the processing.

r2) If the disc to be reproduced is a recordable/rewritable disc, MPU unit 80 reads out the file system of the disc to check if data has already been recorded (ST207). If no data is recorded, MPU unit 80 displays a message "no data is recorded".

r3) MPU unit 80 loads the VMG file (ST207) and determines programs and cells to be reproduced (it prompts the user to select whether or not to determine default programs and cells) (ST208). In this case, if the user selects a reproducing process in the recorded order, MPU unit 80 executes reproduction according to ORG_PGCI; if he or she selects a reproducing process for each program (edited by the user), MPU unit 80 executes reproduction according to UD_PGC (playlist) with a number corresponding to the program that the user wants to reproduce.

r4) MPU unit 80 determines the object to be reproduced (ESOB/EVOB), reproduction start PTM, and the like based on title information (if PSI information and SI information are unknown, MPU unit 80 sets to execute only a transfer process to the STB), resume information (PL_RSM_IFO, PG_RSM_IFO), cell information (EX_CI), and the like. Also, MPU unit 80 determines a reproduction start file pointer (logical address) and ESI of a stream to be reproduced based on the reproduction start PTM. Furthermore, MPU unit 80 sets respective decoder units based on STI and ESI values to prepare for reproduction (ST211A).

r5) Next, MPU unit 80 determines a reproduction scheme based on AP_FORMAT1 and AP_FORMAT2 (see FIGS. 6 and 8) (ST211B).

r6) If a TYPE B stream is not to be reproduced (NO in ST211X), MPU unit 80 determines a stream to be reproduced based on the PSI information and SI information, and saves the PSI information and SI information in the work RAM (ST211D). If a TYPE B stream is to be reproduced (YES in ST211X), MPU unit 80 sets to transmit all streams to the STB (ST211E).

r7) MPU unit 80 then executes processes upon reproduction start. MPU unit 80 checks if the object to be reproduced is an ESOB of TYPE B. If the object to be reproduced is not an ESOB of TYPE B (NO in ST213X), MPU unit 80 enters a decoder setting process (ST217); otherwise (YES in ST213X), it executes only a TS packet transmission process (ST219).

r8) Next, MPU unit 80 executes a cell reproducing process (ST220), and then checks if reproduction is to end. If reproduction is to end (YES in ST230), MPU unit 80 executes an error check process. If any error has occurred (YES in ST240), MPU unit 80 displays a message that advises accordingly (ST242), and executes a reproduction end process (ST244). If no error has occurred (NO in ST240), MPU unit 80 executes another reproduction end process (ST246), thus ending this operation.

r9) If reproduction is not to end (NO in ST230), MPU unit 80 determines the next cell based on PGCI (ST232), and the process returns to block ST211A. MPU unit 80 checks if the settings of decoder unit 59 (ST217) have been changed. If the settings of decoder unit 59 have been changed, MPU unit 80 sets changed attributes in decoder unit 59 so as to change decoder settings in response to the next sequence end code.

r10) MPU unit 80 repeats the same processes (ST211A to ST232) while checking if reproduction is to end (ST230).

Note that, although not shown, a practical example of the process in block ST220 upon cell reproduction is as follows.

t1) MPU unit 80 determines start file pointer FP (logical block number LBN) and end file pointer FP (logical block number LBN) of EX_CELL based on the contents of TMAPI. Furthermore, MPU unit 80 determines start ESOBU ENTRY and end ESOBU ENTRY based on the start and end times in EX_CI, and accumulates the data lengths of entries until target ESOBU_ENTRY in ADR_OFS, thus obtaining a start address (LB = FP) and end address. MPU unit 80 calculates the remaining EX_CELL length by subtracting the start address from the end address, and sets the reproduction start time in the STC. MPU unit 80 determines the PID to be reproduced and sets it in the decoder (STB, digital tuner). In this case, MPU unit 80 can use the PID intact if the 13-bit PID is set. However, MPU unit 80 determines the PID with reference to PMT data if the PID is set based on the order in the PMT data.

t2) MPU unit 80 executes an ESOB continuity check process.

t3) MPU unit 80 executes a read process during reproduction, and determines the read address and read size based on the start file pointer.

t4) MPU unit 80 compares the read unit size to be read out with the remaining cell length. If the remaining cell length is larger than the read unit size, MPU unit 80 sets, as the remaining cell length, a value obtained by subtracting the read unit size to be read out from the remaining cell length. If the remaining cell length is smaller than the read unit size, MPU unit 80 sets the read unit size in the remaining cell length, and sets the remaining cell length to be zero.

t5) MPU unit 80 sets the read length in a read unit length, and also sets the read address, read length, and read command in the disc drive unit.

t6) If data transfer starts, the control waits until data for one ESOBU are stored. If data for one ESOBU are stored, MPU unit 80 loads data for one ESOBU from the buffer, and executes a buffer decoder transfer process. MPU unit 80 then increments read file pointer FP and sets the MPEG decoder in a normal mode. After that, the process advances to t7).

t7) MPU unit 80 checks if transfer is complete. If transfer is complete, the process advances to t10).

t10) MPU unit 80 checks if a STOP SW has been pressed. If the STOP SW has been pressed, MPU unit 80 saves resume information (RSM_IFO) in PG_RSM_IFO in case of title reproduction or in PL_RSM_IFO in case of playlist reproduction, and then executes an end process.

t11) If the STOP SW has not been pressed, MPU unit 80 checks the remaining cell length. If the remaining cell length is not "0", i.e., if the current cell is not the last one, the process returns to t3); if it is "0", MPU unit 80 ends this processing.

The flow of the reproducing process may be as follows.

f1) MPU unit 80 checks if the disc to be reproduced is a rewritable disc (R, RW, RAM). If the disc to be reproduced is not a rewritable disc, MPU unit 80 returns a message that advises accordingly, and ends the processing.

f2) MPU unit 80 reads out the file system of the disc to check if data has already been recorded. If no data is recorded, MPU unit 80 displays a message "no data is recorded" and ends the processing.

f3) MPU unit 80 loads the VMG file and determines programs and cells to be reproduced (it prompts the user to select them). In this case, if the user selects a reproducing process in the recorded order, MPU unit 80 executes reproduction according to ORG_PGCI; if he or she selects a reproducing process for each program, it executes reproduction according to UD_PGC with a number corresponding to the program that the user wants to reproduce.

f4) MPU unit 80 reads out the value of PKT_TY to check if a broadcasting scheme is compatible. If the broadcasting scheme is not compatible, MPU unit 80 displays a message that advises accordingly, and ends the processing (or the process advances to the next CELL).

f5) MPU unit 80 determines the ESOB/EVOB to be reproduced, reproduction start PTM, and the like based on title information (if PSI information and SI information are unknown, MPU unit 80 sets to execute only a transfer process to the STB), resume information (PL_RSM_IFO, PG_RSM_IFO), and the like. Also, MPU unit 80 determines a reproduction start file pointer (logical address) and ESI of a stream to be reproduced based on the reproduction start PTM. Furthermore, MPU unit 80 sets respective decoder units based on STI and ESI values to prepare for reproduction. Also, MPU unit 80 makes APS settings (e.g., APS = ON/OFF, APS type, and the like) in the video decoder based on CCI in the packet group header at the head position, and also CGMSA settings in the video recorder based on digital copy control. Moreover, if a digital output (IEEE1394, Internet, or the like) is available, MPU unit 80 sets 0: scramble ON or output inhibition or 1: direct output in the output IC based on the EPN value. If LCT = 0, MPU unit 80 constrains the image resolution to convert HD image quality into SD image quality; if LCT = 1, it sets "direct output" in the output IC. At this time, if the reproduction start frame is not I-picture data, MPU unit 80 reads out I-picture data immediately before that frame and starts decoding there. MPU unit 80 then starts display after the target frame is decoded, thus starting normal reproduction.

f6) MPU unit 80 executes processes upon reproduction start.

f7) MPU unit 80 sets up respective decoders.

f8) MPU unit 80 executes a cell reproducing process, and then checks if reproduction is to end. If reproduction is to end, MPU unit 80 executes an error check process. If any error has occurred, MPU unit 80 displays a message that advises accordingly; otherwise, it executes a reproduction end process, thus ending this operation.

f9) MPU unit 80 determines the next cell based on PGCI. MPU unit 80 checks if the settings of the decoder have been changed. If the settings of the decoder have been changed, MPU unit 80 sets changed attributes in the decoder so as to change decoder settings in response to the next sequence end code.

f10) MPU unit 80 checks if reproduction is to end. If reproduction is not to end, the process returns to f6).

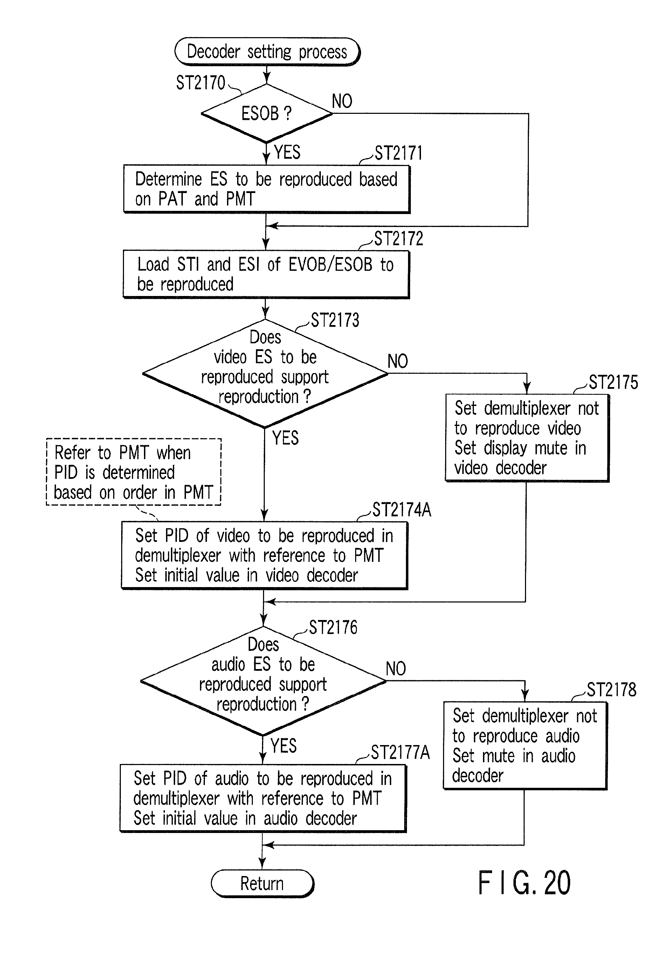

FIG. 20 is an exemplary flowchart explaining the decoder setting process (ST217). A setting example of the decoder will be described below.

s1) If an object to be reproduced is an ESOB (YES in ST2170), MPU unit 80 determines a group to be reproduced, and also ESs to be reproduced (ST2171). If an object to be reproduced is an EVOB (NO in ST2170), the control skips block ST2171.

s2) MPU unit 80 loads attribute information (STI, ESI) of the ESOB (or EVOB) to be reproduced (ST2172).

s3) MPU unit 80 checks if the ESOB (or EVOB) to be reproduced has a format supported by the recorder (the apparatus in FIG. 11 or the like). If the format is unsupported (NO in ST2173), MPU unit 80 makes device settings not to reproduce the ESOB and sets display mute (ST2175).

s4) If video data to be reproduced can be reproduced (YES in ST2173), MPU unit 80 makes reproduction preparation (ST2174A). In this case, MPU unit 80 can use the PID intact if the 13-bit PID is set. However, MPU unit 80 determines the PID with reference to PMT data if the PID is set based on the order in the PMT data.

s5) MPU unit 80 checks if audio data to be reproduced can be reproduced. If the audio data can be reproduced (YES in ST2176), MPU unit 80 makes reproduction preparation (ST2177A). In this case, MPU unit 80 can use the PID intact if the 13-bit PID is set. However, MPU unit 80 determines the PID with reference to PMT data if the PID is set based on the order in the PMT data. If the audio data cannot be reproduced (NO in ST2176), MPU unit 80 makes device settings not to reproduce the audio data and sets audio mute (ST2178).

The decoder setting process may also be executed as follows.

g1) MPU unit 80 determines a group to be reproduced, and also ESs to be reproduced.

g2) MPU unit 80 loads attribute information (STI or ESI).

g3) MPU unit 80 checks if a format can be supported by the recorder. If the format can be supported by the decoder, MPU unit 80 makes corresponding settings; otherwise, it sets mute.

g4) MPU unit 80 checks if video data to be reproduced can be reproduced. If the video data can be reproduced, MPU unit 80 makes reproduction preparation; otherwise, it sets mute.

g5) MPU unit 80 checks if audio data to be reproduced can be reproduced. If the audio data can be reproduced, MPU unit 80 makes reproduction preparation; otherwise, it sets mute.

FIG. 21 is an exemplary flowchart explaining an example of a title reproduction determination process. Since there exist a plurality of ESTR_FI structures upon reproduction, it needs to check the recorder supports reproduction. For this reason, the determination process is executed, for example, as follows.

o1) MPU unit 80 reads out management information (HDVR_MG in FIG. 10) and extracts the PGCI and ESIT_FIT from the readout information (ST400). MPU unit 80 then determines ESTR_FI to be reproduced based on information (ESTR_FIN) in cell general information (C_GI) included in cell information (EX_GI) in the PGCI, and reads out ESTR_FI_SRP in correspondence with that information (ST402).

o2) MPU unit 80 checks the value of AP_FORMAT_1 in the ESTR_FI_SRP (FIG. 6). If that value indicates compatible digital broadcasting, MPU unit 80 executes a reproducing process according to the conventional standard. If that value indicates incompatible digital broadcasting, MPU unit 80 displays a message that advises accordingly, and ends the process in FIG. 21. On the other hand, if that value indicates a TS standard (that proposed by this embodiment) other than digital broadcasting to be handled by the conventional standard (if "nn" of HR_SFInn.IFO in FIG. 6 = F0 to FF, i.e., if the value of AP_FORMAT_1 indicates Manufacturer_Mode), the process advances to block ST406.

o3) In block ST406, MPU unit 80 checks Manufacturer_ID. If that ID is supported by the recorder (YES in ST406), the process advances to block ST408; otherwise (NO in ST406), MPU unit 80 displays a message that advises accordingly, and ends the process in FIG. 21.

o4) In block ST408, MPU unit 80 selects the source device based on the value of MNF_AP_ID.

o5) MPU unit 80 reads out ESTR_FI according to ESTR_FI_FN (FIG. 6) in the ESTR_FI_SRP (ST410), and checks compatibility of Manufacturer_ID and MNF_AP_ID in ESTR_FI_GI (FIG. 6) (ST412).

o6) MPU unit 80 detects the ESOB structure based on the PKT_TY, PKT_SZ, PKT_GRP_SZ, and PKT_Ns, reads out the remaining management information file (IFO) based on the format corresponding to the source confirmed based on the MNF_AP_ID, and sets to execute reproduction (ST414).

<Effect of Embodiment>

With the aforementioned processes, a flexible control operation corresponding to TS-compatible contents other than digital broadcasting can be implemented.

Also, the mode that can generate STR_FI, ESOBI, and the like in a format unique to a manufacturer (Manufacturer_MODE) can be added to the HD_DVD-VR standard. With this mode, the features of recorders for respective manufacturers (makers) can be exploited.

**Claims**

1.  An information medium configured to record a digital stream signal using a predetermined format, **characterized by** comprising:

    a management area (130 in FIG. 1) and a data area (131-133 in FIG. 1), wherein the data area is configured to separately record data of the digital stream signals as a plurality of objects (ESOBs), the management area is configured to record predetermined management information (HDVR_MG in FIG. 6, or HR_SFInn.IFO in FIG. 7), and the management information includes information (Manufacturer_MODE : ESTR_FI_FN: HR_SFInn.IFO in FIG. 6) indicating recording in a management format unique to a manufacturer and information (Manufacturer_ ID in FIG. 6) used to specify that manufacturer.

2.  The medium of claim 1, **characterized in that** when the predetermined format is the management format unique to the manufacturer, MPEG elementary stream information (ESOB_ESI in FIG. 9) used in the recording is configured to include a manufacturer unique information area (Manufacturer DATA) for each digital stream, and a flag (NORMAL flag) indicating that the elementary stream information is different from elementary stream information of the predetermined format.

3.  The medium of claim 1, **characterized in that** when the predetermined format is the management format unique to the manufacturer, the management information (ESOBI_GI in FIG. 8) is configured to include a manufacturer unique information area (Manufacturer DATA in FIG. 8) for each object.

4.  The medium of any one of claims 1 to 3, **characterized in that** when the predetermined format is the management format unique to the manufacturer, file information (ESTR_FI_GI in FIG. 7) in one field of the management information is configured to include the information (Manufacturer_ID) used to specify the manufacturer and information (MNF_ AP_ID) of the digital stream.

5.  The medium of any one of claims 1 to 4, **characterized in that** when the predetermined format is the management format unique to the manufacturer, search pointer information (ESTR_FI_SRP in FIG. 6) in one field of the management information is configured to include the information (Manufacturer_ID) used to specify the manufacturer and information (MNF_AP_ID) of the digital stream.

6.  A recording method using an information medium as defined in claim 1, **characterized by** comprising:

    recording (ST145 in FIG. 15) the digital stream signal in the data area; and
    recording (ST150 in FIG. 15) the management information in the management area.

7.  A reproducing method using an information medium as defined in claim 1, **characterized by** comprising:

    reading (ST207 in FIG. 19) the management information from the management area; and
    reproducing (ST220 in FIG. 19) the digital stream signal from the data area.

8.  A setting method using an information medium as defined in claim 1, **characterized by** comprising:

    reading (ST400 in FIG. 21) the management information from the management area; and
    making (ST406-ST414 in FIG. 21), when the management information includes the information indicating recording in the management format unique to the manufacturer, a reproduction setting of the digital stream signal recorded in the management format unique to the manufacturer.

Disc-shaped information storage medium 100

(a)

(b)

| Lead-in area | Volume/file structure information area | Data area | Lead-out area |
|---|---|---|---|
| /110 | /111 | /112 | /113 |

(c)

| General computer information recording area | AV data recording area | General computer information recording area |
|---|---|---|
| /120 | /121 | /122 |

(d)

| AV data management information recording area | ROM_Video object group recording area | VR object group recording area | Stream object group recording area |
|---|---|---|---|
| /130 | /131 | /132 | /133 |

(e)

| EVideo· Object (EVOB) | ... | EVideo· Object (EVOB) |   | EStream· Object (ESOB) | ... | EStream· Object (ESOB) |
|---|---|---|---|---|---|---|
| /140 |  | /140 |  | /141 |  | /141 |

(f)

| EVOBU | ... | EVOBU |   | ESOBU | ... | ESOBU |
|---|---|---|---|---|---|---|
| /142 |  | 142 |  | /143 |  | 143 |

(g)

| RDI_Pack | V_Pack | A_Pack | ... |   | Packet_Group | ... | Packet_Group |
|---|---|---|---|---|---|---|---|
| /144 | /145 | 146 |  |  | /147 |  | 147 |

Packet_Group length=16 logical blocks

(h)

| Packet_Group Header | PATS | MPEG-TS packet | PATS | MPEG-TS packet | ... | PATS | MPEG-TS packet |
|---|---|---|---|---|---|---|---|
| /161 | /162 | /163 | /162 | /163 |  | /162 | 163 |

FIG.1

FIG. 2

FIG. 3

Root
DVD_HDVR

HR_MANGER.IFO — HDVMG File
HR_MANGER.BUP — HDVMG Backup File

HDVR_VOB — (Store EVOB related files)

HR_Vmmmm.MAP — EVOB TMAP File (0001~mmmm~1998 Matched with EVOB_INDEX)
HR_MOVIE.VRO — VR Object File
HR_Vmmmm.BUP — EVOB TMAP Backup File (0001~mmmm~1998)

HDVR_SOB — (Store ESOB (AT_SOB) related files)

HR_SFInn.SFI — ESOB STR_FI File (00~nn~0Xff)
Snn_mmmm.SMP — ESOB TMAP File (00~nn~0Xff), (0001~mmmm~1998) Matched with ESOB (AT_SOB)_INDEX)
HR_STRnn.SRO — SR Object File (00~nn~0Xff)
HR_SFInn.BUP — ESOB STR_FI Backup File (00~nn~0Xff)
Snn_mmmm.BUP — ESOB TMAP Backup File (00~nn~0Xff), (0001~mmmm~1998)

ESOB
(TS base)

EVOB
(PS base)

TYPE A_ESOB
(Cognizable contents)

TYPE B_ESOB
(Incongnizable contents)

EVOB : For analog broadcasting and self recording/reproduction
ESOB : For digital broadcasting
TYPEA_ESOB : Cognizable contents
TYPEB_ESOB : Incongnizable contents
PS : Program Stream
TS : Transport Stream

FIG. 4

ESOB
(TS base)

TYPE A_ESOB
(Cognizable contents)
Contents of first type
or second type

TYPE B_ESOB
(Incongnizable contents)
Contents of third type

TYPE C_ESOB
Contents of fourth
type

First type : append to TYPE A_ESOB without ESI
Second type : append to TYPE A_ESOB with ESI
Third type : append to TYPE B_ESOB
Fourth type : append as new TYPE C_ESOB

FIG. 5

HDVR_MG

HDVR_MGI
...
EX_M_AVFIT
...
ESTR_FIT
...

ESTR_FI_SRPTI

ESTR_FI_SRPT

ESTR_FI_SRP #1

ESTR_FI_FN : ESTR_FI file name
AP_FORMAT_1 : Broadcasting scheme
Manufacture_ID : Manufacturer ID
MNF_AP_ID

...

ESTR_FI_SRP #n

ESTR_FI (Independent file) #1-#n

STMAPIT (Independent file) #1-#n

ESTR_FI_SRP_Ns : Number of ESTR_SRPs : $0 \leqq$ ESTR_FI_SRP_Ns $\leqq 4$
AP_FORMAT1 : Describe broadcasting scheme (Major) :
00010001h=JapanISDB, 00020001h=ATSC, 003001h=Europe DVB, ffffffffh or 00000000h=Manufacturer_MODE
ESTR_FI_FN : ESTR_FI file name : HR_SFInn.IFO
This "nn" part is reflected in File Name : HR_STMnn.IFO of STMAP to determine file name of STMAP
nn=F0~FF : Manufacturer_MODE
Manufacturer_ID : Manufacturer ID (example : toshibo...)
MNF_AP_ID : Set source of recorded stream (example : digital camera, digital VTR...)

F I G. 6

HR_SFInn.IFO

SFI_ID : Stream file information ID
    "DVD HR SFI00"=(HR_SFI00.IFO)
                (HR_STM00.IFO)
    SFI of Type B
    (in case of stream to be recorded without cognizance)
    "DVD HR SFInn"=(HR_SFInn.IFO) : nn=01~0xfb
                (HR_STMnn.IFO)
    SFI of Type A
    (in case of digital broadcasting stream to be recorded
    after cognizance)
    "DVD HR SFInn"=(HR_SFInn.IFO) : nn=0xfc~0xff
                (HR_STMnn.IFO)
    SFI of Type C (in case of stream which is to be
    recorded after cognizance and is not recognized as
    digital broadcasting)
MNF_AP_ID : Set source of recorded stream (example :
digital camera, digital VTR...)
Manufacturer_DATA : Freely set by each manufacturer

ESTR_FI_GI

| SFI_ID |
| --- |
| PKT_TY : Packet type |
| PKT_SZ : Packet size |
| PKT_GRP_SZ : Packet group size |
| PKT_Ns : Number of packets in packet group |
| Manufacturer ID : Manufacturer ID |
| Manufacturer DATA |
| MNF_AP_ID |

| ESOBI_SRP #1 |
| --- |
| ... |
| ESOBI_SRP #K |
| ESOBI #1 |
| ... |
| ESOBI #K |

F I G. 7

EP 1 898 419 A1

| ESOBI_GI |
| --- |
| ESOB_ESI#1(Second type to fourth type) |
| ... |
| ESOB_ESI#m |
| ... |
| ESOB_TMAPI |

| ... |
| --- |
| ESOB_TY |
| AP_FORMAT_2 |
| NETWORK_ID |
| TS_ID |
| SERCICE_ID |
| Format_ID |
| ESOB_REC_TM |
| ESOB_REC_TM_SUB |
| LOCAL_TM_ZONE |
| ESOB_DURATION |
| ESOB_S_PTM |
| ESOB_E_PTM |
| SERVICE_TYPE |
| CP_CTRL_INFO(CCI) |
| Video recording rate |
| Reserved |
| PMT_PID |
| PCR_PID |
| ESOB_DEF_V_SOB_ESIN |
| ESOB_ES_Ns |
| ESOB_V_ES_Ns |
| ESOB_A_ES_Ns |
| ESOB_REC_Mode |
| NORMAL flag |
| Manufacturer_DATA |

ESOB_REC_MODE : 01=Type_A ESOB, 02=Type_B ESOB,
03=Type_C ESOB(Fourth type)
NORMAL flag : 01=ISDB mode (conventional ESI structure),
02=New ESI mode (new ESI structure)
ESOB_TMAPI : TYPE_A or C=PTM base, TYPE_B=PATS base

# FIG. 8

# FIG.9

| ESOB_ESI |
|---|

| ES_TY |
|---|
| ES_PID |
| STREAM_TYPE |
| Manufacturer DATA |
| Es_index |

ES_TY:

| NORMAL flag | Type of ES |
|---|---|

Type of ES : 00=Video ES 0x10=AUDIO ES
Normal_FLAG : 01=Use new ESI structure, 00=Use ISDB mode (conventional ESI structure)
ES_PID : PID of ES
STREAM_TYPE : STREAM type indicated in PMT
Es_index : Index number assigned to ES
Manufacturer_DATA : Field freely set by each manufacturer
  Example : V_ATR : Video attribute information

| Video compression mode | Source resolution | Aspect Ratio | Source picture Progressive mode | Frame rate |
|---|---|---|---|---|

A_ATR : Audio attribute information

| Audio_Coding_Mode | fs | Number of audio channels | Bit rate |
|---|---|---|---|

FIG. 10

FIG.11

Start

Initial setting ST10

Display setting ST12

Key input ST14

Interpret key input ST16

Parallelly process for respective tasks

Program setting process ST20

Video recording process ST22

Reproduction process ST24

Digital output process to STB ST26

Edit process ST28

F I G. 12

Enter edit process

Edit contents ST280

(EP edit) A

D (Playlist generation process)

(Copy, move) B

C (Delete process)

EP edit process ST282A

Copy/move process ST282B

Delete process ST282C

Playlist generation process (set initial value : value indicating head of PL in PL_RSM_IFO) ST282D

Set program update date and time (EX_PGI, EX_IT_TXT, EX_MNFI) (set upon changing one of EX_PGI, EX_CI, EVOB, and ESOB) ST284

Return

F I G. 13

```
                        ( Start )
                            │
                            ▼              ST105
              ┌─────────────────────────────┐
              │ Recording pre-process : write│
              │ respective management areas  │
              │ (generate VMG), etc.         │
              └─────────────────────────────┘
                            │
                            ▼          ST106
                      ◇─────────◇          NO
                      │ TS video│────────────────────┐
                      │recording?│                    │
                      ◇─────────◇                     │
                            │ YES                      ▼
          ST107             │                   ╭──────────────╮
              ◇─────────◇   ▼        NO          │  To VR video │
              │Cognizable?│──────────┐           │recording process│
              ◇─────────◇            │           ╰──────────────╯
                   │ YES             │
                   ▼      ST109A     ▼          ST109B
      ┌──────────────────────┐   ┌──────────────────────┐
      │Set to generate       │   │Set to generate       │
      │management            │   │management            │
      │information of         │   │information of TYPE B │
      │TYPE A and/or C        │   └──────────────────────┘
      └──────────────────────┘              │
                   │◄───────────────────────┘
                   ▼        ST110
              ◇─────────◇        NO
              │Device unique│──────────────┐
              │  mode ?     │              │
              ◇─────────◇                  │
                   │ YES    ST111          │
      ┌──────────────────────┐             │
      │Set respective values │             │
      │in Manufacturer_MODE  │             │
      │and MNF_AP_ID         │             │
      └──────────────────────┘             │
                   │◄────────────────────────┘
                   ▼        ST112
      ┌──────────────────────────────┐
      │Video recording initial setting│
      │Reset STC unit and PATS        │
      │counter, and make write        │
      │preparation in drive units     │
      │Initialize formatter unit : set│
      │CELL, ESOBU, PG, and packet    │
      │group division, etc.           │
      └──────────────────────────────┘
```

ST114

Video recording start setting : apply buffer data fetch start process to formatter unit

ST116

Extract PAT from buffer, and determine PMT based on user's program setting
Extract PMTs as many as number of streams to be recorded from buffer, and save PAT, PMT, NIT, etc. upon start in work RAM

(A)

```
┌─────────────────────────────────────────┐
│ PAT : TS_ID, NETWORK_PID, PMT_ID         │
│ PMT : SERVICE_ID, REG_DES_VALUE,         │
│       PCR_PID, ESOB_Es_Ns                │
│ NIT : SERVICE_TYPE etc.                  │
└─────────────────────────────────────────┘
```

F I G. 14

A

```
                                    ST120
        ┌──────────────────────────┐
        │ Generate ESI as many as  │
        │ number of streams from PMT│
        └──────────────────────────┘
                                    ST130
        ┌──────────────────────────┐
        │    Buffer fetch process   │
        └──────────────────────────┘
                                  ST140
              ╱ Do recording  ╲
             ╱ data stored in buffer memory ╲  NO
             ╲ reach predetermined ╱
              ╲    size ?    ╱
                   │ YES
                                  ST145
        ┌──────────────────────────┐
        │    Stream write process   │
        └──────────────────────────┘
                                  ST147
     NO    ╱   Delimit   ╲
    ┌──────╲   ESOB ?   ╱
    │        ╲        ╱
    │          │ YES        ST160
    │  ┌──────────────────────────┐
    │  │  ESOB delimitation process│
    │  └──────────────────────────┘
    │              │
    │                             ST148
    │         ╱    Video    ╲
    NO ───────╲ recording end key ╱
    │          ╲   input ?  ╱
    │               │ YES       ST150
```

ESOB delimitation condition
Transition of programs,
transition of attributes, end
of video recording process, etc.

```
    ┌──────────────────────────────────────┐
    │ Video recording end process          │
    │   Fetch remaining segmentation information│
    │   from formatter unit & initialization│
    │   Write in VMG (generate EPGCI, generate│
    │   STR_FI : segmentation information,  │
    │   I-PIC information, etc.)            │
    │     Set reproduction time of stream with│
    │     default PID in ESOB_DURATION     │
    └──────────────────────────────────────┘
                   │
              ( End )
```

F I G. 15

ESI generation process

ST1202
Fetch information in PSI and SI
Set "2" in NORMAL flag if source is not digital broadcasting,
and set "01" if source is digital broadcasting in Japan

ST1203
Check attribute of recorded stream

Video stream

Another stream

Audio stream

ST1213A
Generate new ESI of ES_TY =0 based on readout data

ST1217A
Generate new ESI of ES_TY =0x80 based on readout data

ST1215A
Generate new ESI of ES_TY= 0x40 based on readout data

ST1213C
Extract compression mode, frame rate, progressive, aspect ratio, resolution, etc., and set them in Manufacturer_DATA
PMT→ES_PID, STREAM_TYPE, COMPONENT_TAG
Component descriptor→STREAM_ COMPONENT, COMPONENT_TYPE

ST1217C
PMT→ES_PID, STREAM_TYPE, COMPONENT_TAG

ST1215C
Extract coding mode, sampling frequency, number of channels, etc., and set them in Manufacturer_DATA
PMT→ES_PID, STREAM_TYPE, COMPONENT_TAG

ST12130
Does ES for which ESI is to be generated still remain ?

YES

NO

Return

F I G. 16

```
        ( ESTR_FI generation process )
                      |
                      |          ~ST1500B
  ┌───────────────────────────────────────────┐
  │ Increment number of ESOBI_SRPs by 1        │
  │ PKT_TY←0x00 (MPEG_TS)                       │
  │ Set Manufacturer_ID, MNF_AP_ID, etc.        │
  │ if source is not digital broadcasting       │
  └───────────────────────────────────────────┘
                      |          ~ST1502B
  ┌───────────────────────────────────────────┐
  │ Set recording start time in ESOB_REC_       │
  │ TM and SOB_REC_TM_SUB                        │
  │ Extract and set ESOB_S_PTM and               │
  │ ESOB_E_PTM from stream                       │
  └───────────────────────────────────────────┘
                      |
    ST1506B ─┐        |
            ◇ TS stream ?     NO ──────────────────────────┐
                      |                                     |   ~ST1510B
                   YES|                          ┌─────────────────────────┐
                      |          ~ST1508B        │ Set PKT_GRP_SZ←value      │
  ┌───────────────────────────────┐              │ corresponding to format   │
  │ Set PKT_GRP_SZ←16, PKT_Ns←0xAA,│              │ to be recorded,           │
  │ country_code←JPN, and AP_FORMAT1│             │ PKT_Ns←value              │
  │ ←JapanISDB or 0xffffffff        │             │ corresponding to format   │
  └───────────────────────────────┘              │ to be recorded,           │
                      |          ~ST1513B         │ country_code←country      │
  ┌───────────────────────────────┐              │ code of apparatus, and    │
  │ Set AP_FORMAT2←1 (ISDB-S) or 02 │             │ AP_FORMAT1←                │
  │ (ISDB-T) or 0xffff              │             │ corresponding             │
  │ Set TS_ID, NETWORK_PID, and PMT_│             │ broadcasting scheme       │
  │ PID based on PAT in stream      │             └─────────────────────────┘
  │ Set 0xff if not available       │
  └───────────────────────────────┘
                      |          ~ST1516B
  ┌───────────────────────────────┐
  │ Set Program_number (SERVICE_ID in│
  │ PMT), Format_Id, version (REG_DES│
  │ value), PCR_PID, ESOB_Es_Ns, V_ES_│          ┌──────────────────────────┐
  │ Ns, and A_ES_Ns based on PMT, NIT,│         ‖ TMAP setting process      ‖  ~ST1540B
  │ and EIT in stream                 │          └──────────────────────────┘
  │ Set ESI number of Video with smallest│                 |     ~ST1550B
  │ component tag value (preferentially use│     ┌──────────────────────────┐
  │ ESI number set by component tag   │         │ Set video recording start │
  │ group descriptor) as DEF_V_SOB_ESIN│        │ LB address in ADR_OFS     │
  │ Set SOB_TY according to TMAP type │         └──────────────────────────┘
  └───────────────────────────────┘                     |     ~ST1554B
                                                 ┌──────────────────────────┐
                                                 │ Set edit date and time   │
                                                 └──────────────────────────┘
                                                         |
                                                    ( Return )
```

F I G. 17

```
        ( PGC generation process )
                    |
                    |            ST1600Z
                    v
              /-----------\
             / First video  \    YES
            <  recording for this >------------------------+
             \    disc ?    /                              |
              \-----------/                                |
                    | NO          ST1604Z                  |  ST1602Z
                    v                                       v
        +-----------------------------+      +-----------------------+
        | Set to add PG after recorded PGC |  | Set new ORG_PGC       |
        +-----------------------------+      +-----------------------+
                    |                                       |
                    |<--------------------------------------+
                    |            ST1700Z
                    v
    +------------------------------------------+
    | PG_TY=0                                  |
    | Cell_Ns=number of CELLs                  |
    | Set 0x12 in CHR of VMGI_MAT when         |
    | Language code of short event descriptor  |
    | in EIT is "jpn"                          |
    | Second field of PRM_TXTI=program         |
    | name : set event_name of short event     |
    | descriptor in EIT                        |
    | Set REP_PICTI (set video ESN)            |
    | Set program update date and time         |
    | (PGI, IT_TXT, MNFI)                      |
    +------------------------------------------+
                    |            ST1702Z
                    v
    +------------------------------------------+
    | Set absolute number of PG in PG_INDEX    |
    | Set start CELL number (1) in PG_RSM_IFO  |
    | Set start PTM                            |
    +------------------------------------------+
                    |            ST1703Z
                    v
    +------------------------------------------+
    | CELL_TY→0x30 (TYPE_A) or 0x40            |
    | (TYPE_B) or 0x50 (TYPE_C)                |
    | Set reference ESTR_FI number             |
    | Set reference ESOB number                |
    | Set representative (video) ESI number as |
    | ESIN to be reproduced                    |
    | Set reproduction start PTM and end       |
    | PTM (read STC discontinue information :  |
    | CNT_SEG and set its count)               |
    | Set BLOCK number of ESOB to be           |
    | reproduced                               |
    +------------------------------------------+
                    |
                    v
              (  Return  )
```

F I G. 18

Start

Load VMG ⟋ST207

User determines reproduction start PG
(ORG_PGC, UD_PGC#1, UD_PGC#2) ⟋ST208

Determine EVOB/ESOB to be
reproduced and its reproduction position
based on PG/PL_RSM_IFO and CELLI ⟋ST211A

Determine reproduction method based
on AT_FORMAT1 and AT_FORMAT2 ⟋ST211B

ST211X — TYPE_B ? YES

NO ⟋ST211D

Determine stream to be reproduced
based on PSI information and SI
information
Save PSI information and SI
information in work RAM

Set to transmit all streams to STB ⟋ST211E

ST213X — TYPE_B
ESOB ? YES

NO ⟋ST217

Decoder setting process

Execute only transmission process of
TS_Packet ⟋ST219

Process upon cell reproduction ⟋ST220

End of
reproduction ? NO ⟋ST230

ST240 — YES

Error ? YES

Set next cell based on PGCI ⟋ST232

NO ⟋ST246

Another process upon completion of
reproduction

"Read error" ⟋ST242

Reproduction end process ⟋ST244

End

Return (error)

FIG. 19

F I G. 20

Title reproduction
determination process

ST400

Read out ESTR_FIT

ST402

Determine ESTR_FI to be reproduced
based on PGCI to be reproduced
designated by user and ESTR_FIN in
C_GI in CELLI, and extract ESTR_
FISRP corresponding to determined
ESTR_FI

Manufacturer
_MODE

ST404

AP_FORMAT_1          Incompatible digital broadcasting

Compatible digital broadcasting

Reproduction process of
conventional standard

ST406

Manufacturer_ID=          NO
value supported by
recorder ?

YES          ST408

Select source device based on
MNF_AP_ID value

ST410

Read out target HR_SFI file based on
ESTR_FI_FN in ESTR_FI_SRP

ST412

Read out ESTR_FI_GI and confirm
compatibility of Manufacturer_ID and
MNF_AP_ID

Display message
indicating incompatibility

End

ST414

Detect ESOB structure
based on PKT_TY, PKT_SZ,
PKT_GRP_SZ, and PKT_Ns,
read out remaining IFO in
format corresponding to
source confirmed based on
MNF_AP_ID, and set to
execute reproduction

To reproduction process

FIG. 21

**EP 1 898 419 A1**

**European Patent Office**

**EUROPEAN SEARCH REPORT**

Application Number

EP 07 11 4600

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 091 577 A (MATSUSHITA ELECTRIC IND CO LTD [JP]) 11 April 2001 (2001-04-11) * paragraphs [0052], [0111], [0131] - [0143], [0152], [0182] - [0191], [0233], [0296], [0327], [0380]; claims 1-46; figures 1-32 * | 1-8 | INV. G11B27/32 |
| X | EP 1 632 948 A (TOKYO SHIBAURA ELECTRIC CO [JP]) 8 March 2006 (2006-03-08) * paragraphs [0001] - [0012], [0016], [0027], [0067], [0131], [0145], [0149]; claims 1-7 * | 1-8 | |
| A | JP 2002 084479 A (MATSUSHITA ELECTRIC IND CO LTD) 22 March 2002 (2002-03-22) * abstract; claims 1-45; figures 1-32 * | 1-8 | |

|  |  |
|---|---|
|  | TECHNICAL FIELDS SEARCHED (IPC) |
|  | G11B |

The present search report has been drawn up for all claims

| Place of search | Date of completion of the search | Examiner |
|---|---|---|
| Munich | 21 December 2007 | Durucan, Emrullah |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                               

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 11 4600

This annex lists the patent family members relating to the patent documents cited in  the above-mentioned European search report.
The members are as contained in the European Patent Office EDP file on
The European Patent Office is in no way liable for these particulars which are merely given for the purpose of information.

21-12-2007

| Patent document cited in search report | | | Publication date | Patent family member(s) | | | Publication date |
|---|---|---|---|---|---|---|---|
| EP 1091577 | A | | 11-04-2001 | DE | 60032304 | T2 | 29-03-2007 |
| | | | | US | 6885809 | B1 | 26-04-2005 |
| EP 1632948 | A | | 08-03-2006 | CN | 1758362 | A | 12-04-2006 |
| | | | | JP | 2006073095 | A | 16-03-2006 |
| | | | | KR | 20060050948 | A | 19-05-2006 |
| | | | | US | 2006062136 | A1 | 23-03-2006 |
| | | | | US | 2007092227 | A1 | 26-04-2007 |
| JP 2002084479 | A | | 22-03-2002 | JP | 3760091 | B2 | 29-03-2006 |

EPO FORM P0459

For more details about this annex : see Official Journal of the European Patent Office, No. 12/82

**EP 1 898 419 A1**

**REFERENCES CITED IN THE DESCRIPTION**

**Patent documents cited in the description**

- JP 2002084479 A